# EUROPEAN PATENT APPLICATION

(11) **EP 3 322 219 A1**
(43) Date of publication of application: **16.05.2018**
(21) Application number: 17190806.4
(22) Date of filing: 04.02.2008
(51) Int. Cl.: H04W 36/14, H04L 29/06

(54) **DOMAIN TRANSFER METHOD, SYSTEM, AND DEVICE**

(30) Priority: 15.02.2007 CN 200710079849; 17.04.2007 CN 200710100497; 17.08.2007 CN 200710129687
(62) Divisional of application: 08706487.9
(71) Applicant: HUAWEI TECHNOLOGIES CO., LTD., Guangdong 518129 (CN)
(72) Inventor: XU, Jie, Shenzhen, Guangdong 518129 (CN); XIE, Xiaoqiang, Shenzhen, Guangdong 518129 (CN); ZHU, Dongming, Shenzhen, Guangdong 518129 (CN); ZHANG, Hengliang, Shenzhen, Guangdong 518129 (CN); YE, Songhai, Shenzhen, Guangdong 518129 (CN); DING, Chunyan, Shenzhen, Guangdong 518129 (CN)
(74) Representative: Thun, Clemens

(57) **Abstract**

A domain transfer method, a system, and a device thereof are presented, so as to realize location and domain transfer on a session to be transferred performed by a domain transfer application server (AS). The domain transfer method includes the steps as follows. The domain transfer AS receives a domain transfer request message containing a transfer identifier. The domain transfer AS acquires the transfer identifier from the domain transfer request message, and performs a domain transfer on a corresponding session according to the transfer identifier. The domain transfer system includes a user terminal and a domain transfer AS. The user terminal is adapted to send a domain transfer request message containing a transfer identifier when initiating a domain transfer of a session. The domain transfer AS is adapted to acquire the transfer identifier from the domain transfer request message, and perform the domain transfer on the corresponding session according to the transfer identifier.

## Description

### FIELD OF THE TECHNOLOGY

The present invention relates to communication field, and more particularly, to a domain transfer method, system, and device.

### BACKGROUND

Internet protocol (IP) multi-media sub system (IMS) is a sub system overlaying on an existing packet transferring (PS) domain, and adopts the PS domain to control the signaling and a media transmission bearer channel for the upper layer, introduces the session initiation protocol (SIP) protocol as a service control protocol, so as to provide abundant multi-media services by separating the service control and the bearer control on the basis of characteristics of the SIP that the SIP is simple, easy to be expanded, and convenient to be combined with media. The main functional entities in the IMS include a call session control function (CSCF) for controlling the user registration, the session, and other functions, an application server (AS) for providing various service logic control functions, a home subscriber server (HSS) for managing user subscription data in a centralized way, and a media gateway control function MGCF/IMS media gateway (IM-MGW) adapted to realize an interworking with the circuit switched network. The user gets access to the IMS through the current location proxy node P-CSCF, and the session and service triggering control and the interaction with the service control of the AS are finished by a home domain service node S-CSCF at the registration location.

It is assumed that a CS domain user calls an IMS user, or the session is connected to the CS domain through the IMS, the IMS and the CS domain must realize the interworking. The interworking of the IMS and the CS domain is realized by converting an integrated services digital network user part (ISUP) signaling and the SIP through the MGCF network element.

Whether the signaling between the IMS and the CS domain may be converted or not depends on whether the ISUP signaling and the SIP signaling have the corresponding message or not, whether the cells in the message may realize the mutual mapping or not, and whether the MGCF may convert the mapping or not.

When the network develops towards the IMS, the CS domain and the IMS domain may coexist for a certain period, and in consideration of the operation and management cost, the operator may intend to deploy the service in the IMS domain in a centralized way, so that the service may be accessed through either the CS domain or the IMS domain. In addition, during the evolution of the network, the IP-connectivity access network (CAN) access network having a voice over IP (VoIP) capability is a stepwise deployment process. In order to ensure that the user may get access to the IMS network through the CS in the IP-CAN access network without the VoIP capability, and may provide more abundant service capabilities in the IP-CAN access network with the VoIP capability, it is defined that the real time voice call may be transferred between the CS domain and the IP-CAN access domain. The network logic relations for realizing the two demands are described as follows.

A voice call continuity application server (VCC AS) finishes the transfer management function of the user between the circuit domain and the IP-CAN.

An IMS CS domain control function (ICCF) finishes the adaptation between the CS domain signaling and the IMS domain SIP signaling, and realizes the service control and the interaction of the user in the IMS domain as a user proxy. According to the deployment, the ICCF may also be serially connected in the access path of the packet domain.

The session control message may be delivered between a user equipment (UE) and the ICCF through certain signaling channels, and the signaling channels are all referred to as IMS CS control channels (ICCCs). According to different access network environments, different message delivering protocols may exist. For example, when only the CS domain is connected, the message may be transmitted through an unstructured supplementary service data (USSD) protocol, a short message, and a dual tone multi-frequency (DTMF), etc. When the UE is connected to the IP-CAN without the VoIP capability, the message may be transmitted through the SIP protocol delivered through the IP-CAN.

Since the air interface of the CS domain can only bear one voice call, and in consideration of other conditions such as the transfer speed, when the UE has the session with a plurality of remote users, only one CS domain is established between the ICCF and the UE for bearer, and the service control on the multiple sessions is finished by using the ICCC.

IMS is the description of the third generation partnership project (3GPP), and a similar multi-media sub system also exists in 3GPP2 and telecommunications and Internet converged services and protocols for advanced networking (TISPAN). In the present invention, only the IMS is described for ease of description, but distinctly, the described method is also applicable to the system of the 3GPP2 and the TISPAN.

In the voice call continuity (VCC) project of the 3GPP, the UE initiates the transferring by using a VCC domain transfer number / VCC domain transfer uniform resource identifier (URI) (VDN/VDI). When the UE transfers from the IP-CAN to the CS domain, the process includes the following steps.

In Step 1, the UE initiates a call request to the domain transfer function (DTF), i.e., a functional module of the VCC AS, and the destination is the VDN of the DTF.

In Steps 2-5, the call request initiated by the UE is routed to the DTF after being delivered to the IMS through the CS domain.

In Steps 6-7, the DTF knows that it is a transfer request through the VDN, so as to update an access leg of the session to the access leg of the CS domain, and release the original access leg of the IP-CAN.

When the UE transfers from the CS domain to the IP-CAN, the process includes the following steps.

In Step 1, the UE initiates a call request to the DTF through the IP-CAN, and the destination is the VDI of the DTF.

In Step 2, the call initiated by the UE is routed to the DTF.

In Steps 3-4, the DTF knows that it is a transfer request through the VDI, so as to update the access leg of the session to the access leg of the IP-CAN, and release the original access leg of the CS domain.

During the invention, the inventor finds that in the existing communication system, the VDN and VDI are relatively fixed during the VCC transfer, and they are fixedly configured in the UE, or delivered to the UE through an over-the-air (OTA). In each transfer request, the UE initiates the call request to the DTF by using the VDN or VDI as the called number, regardless of the sessions. When the UE has the sessions with several remote users, the DTF cannot distinguish through the VDN/VDI which session the UE intends to transfer.

### SUMMARY

The present invention is directed to a domain transfer method, system, and device, so as to realize location and domain transfer on a session to be transferred performed by a domain transfer AS.

The domain transfer method according to the present invention includes the steps as follows. A domain transfer AS receives a domain transfer request message containing a transfer identifier. The domain transfer AS acquires the transfer identifier from the domain transfer request message, and performs a domain transfer on a corresponding session according to the transfer identifier.

The domain transfer system according to the present invention includes a user terminal and a domain transfer AS. The user terminal is adapted to send a domain transfer request message containing a transfer identifier when initiating a domain transfer of a session. The domain transfer AS is adapted to acquire the transfer identifier from the domain transfer request message, and perform the domain transfer on the corresponding session according to the transfer identifier.

The user terminal according to the present invention includes a recording unit and a containing unit. The recording unit is adapted to record an association relation between a session and a transfer identifier when the session is established. The containing unit is adapted to acquire the transfer identifier associated with the session from the recording unit, and contain the transfer identifier in a domain transfer request message sent to the domain transfer AS, when a domain transfer of the session is initiated.

The domain transfer AS according to the present invention includes a recording unit and a transferring unit. The recording unit is adapted to record an association relation between a session and a transfer identifier when the session is established. The transferring unit is adapted to acquire the transfer identifier from a transfer request message, acquire the session associated with the transfer identifier from the recording unit, and perform a domain transfer on the session.

In the present invention, the domain transfer AS receives the domain transfer request message containing the transfer identifier; the domain transfer AS acquires the transfer identifier from the domain transfer request message, and performs the domain transfer on the corresponding session according to the transfer identifier, thereby realizing location and domain transfer on the session to be transferred performed by the domain transfer AS.

### BRIEF DESCRIPTION OF THE DRAWINGS

Figure 1 is a flow chart of steps of a method according to an embodiment of the present invention;
Figure 2 is a schematic structural view of a user terminal according to an embodiment of the present invention;
Figure 3 is a schematic structural view of a domain transfer AS according to an embodiment of the present invention;
Figure 4 is a flow chart of Embodiment 1 of the present invention;
Figure 5 is a flow chart of Embodiment 2 of the present invention;
Figure 6 is a flow chart of Embodiment 3 of the present invention;
Figure 7 is a flow chart of Embodiment 4 of the present invention;
Figure 8 is a flow chart of Embodiment 5 of the present invention;
Figure 9 is a flow chart of Embodiment 6 of the present invention;
Figure 10 is a flow chart of Embodiment 7 of the present invention;
Figure 11 is a flow chart of Embodiment 8 of the present invention;
Figure 12 is a flow chart of Embodiment 9 of the present invention;
Figure 13 is a flow chart of Embodiment 10 of the present invention;
Figure 14 is a flow chart of Embodiment 11 of the present invention;
Figure 15 is a flow chart of Embodiment 12 of the present invention;
Figure 16 is a flow chart of Embodiment 13 of the present invention;
Figure 17 is a flow chart of Embodiment 14 of the present invention;
Figure 18 is a flow chart of Embodiment 15 of the present invention;
Figure 19 is a flow chart of Embodiment 16 of the present invention;
Figure 20 is a flow chart of Embodiment 17 of the present invention;
Figure 21 is a flow chart of Embodiment 18 of the present invention;
Figure 22 is a flow chart of Embodiment 19 of the present invention;
Figure 23 is a flow chart of Embodiment 20 of the present invention;
Figure 24 is a flow chart of Embodiment 21 of the present invention;
Figure 25 is a flow chart of Embodiment 22 of the present invention;
Figure 26 is a flow chart of Embodiment 23 of the present invention;
Figure 27 is a flow chart of Embodiment 24 of the present invention;
Figure 28 is a flow chart of Embodiment 25 of the present invention;
Figure 29 is a flow chart of Embodiment 26 of the present invention;
Figure 30 is a schematic view of an implementation flow of a method for providing a multi-session transfer in a multi-access manner according to an embodiment of the present invention;
Figures 31 to 41 are respectively schematic views of the implementation flow of Embodiments 27 to 37;
Figure 42 is a schematic structural view of a system for providing the multi-session transfer in the multi-access manner according to an embodiment of the present invention;
Figure 43 is a schematic structural view of a domain transfer AS for providing the multi-session transfer in the multi-access manner according to an embodiment of the present invention; and
Figure 44 is a schematic structural view of a user terminal for providing the multi-session transfer in the multi-access manner according to an embodiment of the present invention.

### DETAILED DESCRIPTION

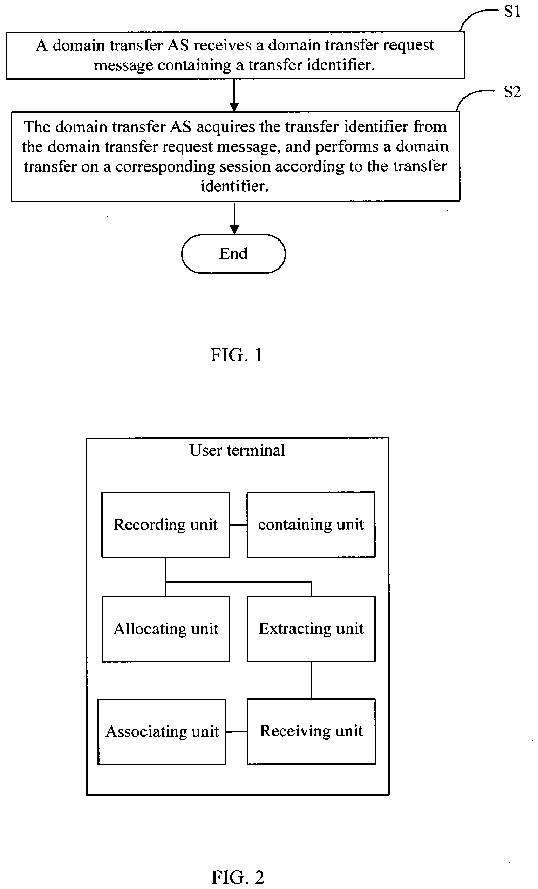

In order to realize the location and domain transfer on a session to be transferred performed by a domain transfer AS, the present invention provides a domain transfer method. Referring to Figure 1, the method includes the steps as follows.

In step S1, a domain transfer AS receives a domain transfer request message containing a transfer identifier.

The transfer identifier in the present invention and a VDN/VDI number are independent of each other, or different VDN/VDI numbers are used in different sessions as the transfer identifier.

In step S2, the domain transfer AS acquires the transfer identifier from the domain transfer request message, and performs a domain transfer on a corresponding session according to the transfer identifier.

The transfer identifier is released after the corresponding session is stopped.

The present invention provides a domain transfer system, which includes a user terminal and a domain transfer AS, and further includes a user proxy network element.

The user terminal is adapted to send a domain transfer request message containing a transfer identifier when initiating a domain transfer of a session.

The domain transfer AS is adapted to acquire the transfer identifier from the domain transfer request message, and perform the domain transfer on the corresponding session according to the transfer identifier.

The user proxy network element may be one of the following user proxy network elements, and may also be any functional combination of the user proxy network elements as follows.

One of the user proxy network elements and the user terminal deliver an ICCC message containing the transfer identifier to each other; and the user proxy network element and the domain transfer AS deliver an SIP message containing the transfer identifier to each other.

Another user proxy network element is adapted to apply a media port resource for the session to be transferred, notify the domain transfer AS, and indicate the domain transfer AS to re-negotiate the session to be transferred with a remote user by using the media port resource, when the user terminal has the session in a CS domain and the user terminal transfers the session from the IP-CAN to the CS domain.

Further another user proxy network element is adapted to release the media port resource corresponding to the session according to the session release notification of the domain transfer AS, and notify the user terminal that the session is released, when the user terminal transfers the session from the CS domain to the IP-CAN.

Still another user proxy network element is located in an access path between the user terminal and the domain transfer AS, and is adapted to finish the session control identifier and the transfer identifier conversion in the message, when the user terminal and the domain transfer AS interact with each other through the message.

Referring to Figure 2, the embodiment of the present invention provides a user terminal, and the user terminal includes a recording unit and a containing unit, and further includes an allocating unit, a receiving unit, and an extracting unit, and/or a receiving unit and an associating unit.

The recording unit is adapted to record an association relation between a session and a transfer identifier when the session is established.

The containing unit is adapted to acquire the transfer identifier associated with the session from the recording unit, and contain the transfer identifier in a domain transfer request message sent to the domain transfer AS, when a domain transfer of the session is initiated. Particularly, when initiating the domain transfer of the session in the IP-CAN, the user terminal sends the SIP session establishment message containing the transfer identifier associated with the session to the domain transfer AS, so as to indicate that the session is transferred to the IP-CAN. Alternatively, when initiating the domain transfer of the session in the CS domain, the user terminal sends the domain transfer request message containing the transfer identifier associated with the session to the domain transfer AS, so as to indicate that the session is transferred to the CS domain. Alternatively, the user terminal sends the message containing the null transfer identifier to the domain transfer AS, so as to indicate that the referred session is a default session.

The allocating unit is adapted to distribute the transfer identifier associated with the session, send the transfer identifier to the recording unit for being recorded, and send the transfer identifier to the domain transfer AS, when the session is established. Particularly, when the user terminal establishes the session in the IP-CAN, the allocating unit distributes the transfer identifier associated with the session, and notifies the domain transfer AS by containing the transfer identifier in the SIP message. Alternatively, when the user terminal establishes the session in the CS domain, the allocating unit distributes the transfer identifier associated with the session, and notifies the domain transfer AS. Alternatively, according to a default rule, the allocating unit distributes the transfer identifier for the session, so that the user terminal and the domain transfer AS acquire the same transfer identifier for the session.

The receiving unit is adapted to receive a message sent from a network side when the session is established.

The extracting unit is adapted to extract the transfer identifier from the message received by the receiving unit, and send the transfer identifier to the recording unit for being recorded. Particularly, when the user terminal establishes the session in the IP-CAN, the domain transfer AS distributes the transfer identifier associated with the session, and notifies the user terminal by containing the transfer identifier in the SIP message. Then, the user terminal acquires the transfer identifier through the extracting unit. Alternatively, when the user terminal establishes the session in the CS domain, the domain transfer AS distributes the transfer identifier associated with the session, and notifies the user terminal. Then, the user terminal acquires the transfer identifier through the extracting unit.

The associating unit is adapted to extract a control identifier from the message received by the receiving unit, and associate the control identifier with the currently established session.

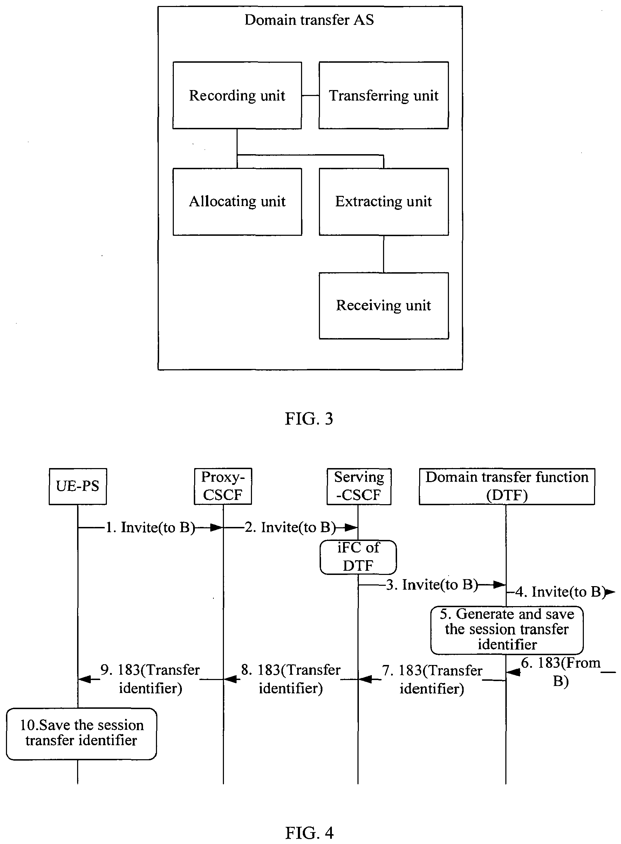

The embodiment of the present invention provides a domain transfer AS, which includes a recording unit and a transferring unit, and further includes an allocating unit; or a receiving unit and an extracting unit; or an allocating unit, a receiving unit, and an extracting unit. Referring to Figure 3, the domain transfer AS, for example, includes a recording unit, a transferring unit, an allocating unit, a receiving unit, and an extracting unit.

The recording unit is adapted to record an association relation between a session and a transfer identifier when the session is established.

The transferring unit is adapted to acquire the transfer identifier from the transfer request message, acquire the session associated with the transfer identifier from the recording unit, and perform a domain transfer on the session.

The allocating unit is adapted to distribute the transfer identifier associated with the session, send the transfer identifier to the recording unit for being recorded, and send the transfer identifier to the domain transfer AS, when the session is established. Particularly, when the user terminal establishes the session in the IP-CAN, the allocating unit distributes the transfer identifier associated with the session, and notifies the user terminal by containing the transfer identifier in the SIP message. Alternatively, when the user terminal establishes the session in the CS domain, the allocating unit distributes the transfer identifier associated with the session, and notifies the user terminal. Alternatively, according to a default rule, the allocating unit distributes the transfer identifier for the session, so that the user terminal and the domain transfer AS acquire the same transfer identifier for the session.

The receiving unit is adapted to receive a message sent from the user terminal when the session is established.

The extracting unit is adapted to extract the transfer identifier from the message received by the receiving unit, and send the transfer identifier to the recording unit for being recorded. Particularly, when the user terminal establishes the session in the IP-CAN, the user terminal distributes the transfer identifier associated with the session, and notifies the domain transfer AS by containing the transfer identifier in the SIP message. Then, the domain transfer AS acquires the transfer identifier through the extracting unit. Alternatively, when the user terminal establishes the session in the CS domain, the user terminal distributes the transfer identifier associated with the session, and notifies the domain transfer AS. Then, the domain transfer AS acquires the transfer identifier through the extracting unit.

The embodiment of the present invention provides a user proxy network element, which includes a forwarding unit, a generating unit, and a cooperating unit, and further includes an applying unit and a releasing unit.

The forwarding unit is adapted to forward the transfer identifier interacted between the user terminal and the domain transfer AS.

The generating unit is adapted to generate the control identifier associated with the session when the session is established.

The cooperating unit is adapted to cooperate with the user terminal through the control identifier generated by the generating unit, so as to record the association relation between the session and the transfer identifier when the session is established.

The applying unit is adapted to apply a media port resource for the session to be transferred and notify the domain transfer AS when the user terminal has the session in the CS domain and the user terminal transfers the session from the IP-CAN to the CS domain.

The releasing unit is adapted to release the media port resource corresponding to the session according to the session release notification of the domain transfer AS, and notify the user terminal that the session is released, when the user terminal transfers the session from the CS domain to the IP-CAN.

The detailed description is given with 26 embodiments as follows.

[Embodiment 1] The UE as a caller establishes the IP-CAN session. The DTF allocates transfer identifier and delivers the transfer identifier to the UE. Referring to Figure 4, the process includes the following steps.

In Steps 1-3, when getting access to the P-CAN, the UE initiates a session to B, and an Invite message is routed to the DTF according to subscription information.

In Steps 4-5, the DTF finds that it is a new call here, the DTF continues to send the call to the called party B, and at the same time distributes a transfer identifier for the session.

In Step 6, the DTF acquires the 183 acknowledgement of the called party B.

In Steps 7-9, the DTF adds the transfer identifier of the session into the acknowledgement message returned to the UE, and returns the acknowledgement message to the UE.

In Step 10, the UE saves the acquired transfer identifier.

After the session is established, if the UE intends to initiate the transfer of the session between the access domains, the transferring flow may use any one of Embodiments 19-22. The embodiments of distributing the transfer identifier when the session is established are the same as this Embodiment, and thus are not repeated here.

### Notes:

The transfer identifier is not only a dynamic VDI/VDN, but also an identifier independent of the VDI/VDN, and may be distributed, contained and delivered by using the manner described in this embodiment. The subsequent embodiments are the same as this embodiment, and thus are not repeated here.

If the session is the first session between the UE and the DTF, the transfer identifier of the session may be the default or the null identifier, and the subsequent embodiments are similar to this embodiment.

Figure 4 only shows that the transfer identifier is returned to the UE through the 183 acknowledgement message, during the practical application, the transfer identifier may be returned to the UE through other acknowledgement messages, such as, a 180 message and a 200 OK message.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the session description protocol (SDP) message content of the text format.

The session is not limited to a pure voice session, and may be a multi-media session. The subsequent embodiments are the same as this embodiment, and thus are not repeated here.

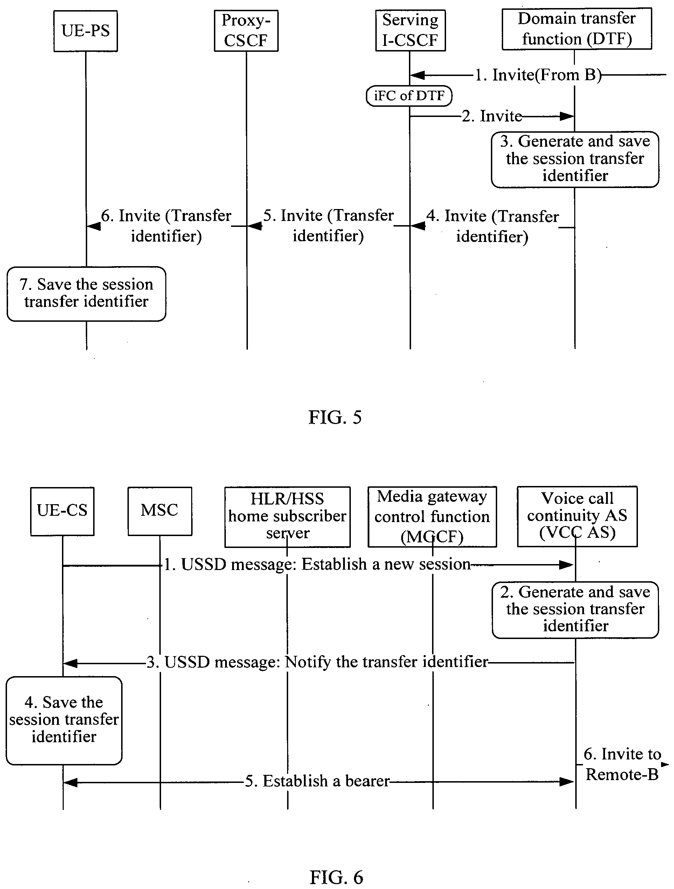

[Embodiment 2] The UE as a call establishes the IP-CAN session. The DTF allocates transfer identifier and delivers the transfer identifier to the UE. Referring to Figure 5, the process includes the following steps.

In Steps 1-2, the DTF receives a session request initiated by a remote user B to the local UE.

In Step 3, the DTF distributes a transfer identifier for the session.

In Steps 4-6, the DTF adds the transfer identifier of the session into the Invite message, and sends the Invite message to the UE.

In Step 7, the UE saves the acquired transfer identifier.

### Notes:

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

[Embodiment 3] The UE as a caller establishes the CS session, and the VCC AS distributes and delivers the transfer identifier to the UE through the ICCC message. Referring to Figure 6, the process includes the following steps.

In Step 1, the UE sends a USSD message in the CS domain to the VCC AS to request to establish a new session to the remote user B.

In Step 2, the VCC AS distributes a transfer identifier for the session.

In Step 3, the VCC AS returns to notify the UE of the distributed transfer identifier of the session through the USSD message.

In Step 4, after receiving the notification of the distributed transfer identifier of the session from the VCC AS, the UE saves the transfer identifier of the session.

In Step 5, a bearer is established between the UE and the VCC AS, and the step and other steps may be performed in parallel or in any sequence. When the CS bearer has been established between the UE and the VCC AS, this step is optional.

In Step 6, the VCC AS continues to route the call request to the next hop towards the remote user B.

### Notes:

In Steps 1 and 3, in addition to the USSD message, the VCC AS and UE may interact through other circuit domain signaling messages, for example, a short message and a DTMF, or the SIP message is delivered through packet. The using manner and the purposes of the message are the same as the ICCC message channel between the UE and the ICCF (the message of the IMS service is controlled by using the delivery of the original signaling message), so here the manners of delivering between the UE and the VCC AS by using the original signaling channel are all referred to as the ICCC. The subsequent embodiments are the same as this embodiment.

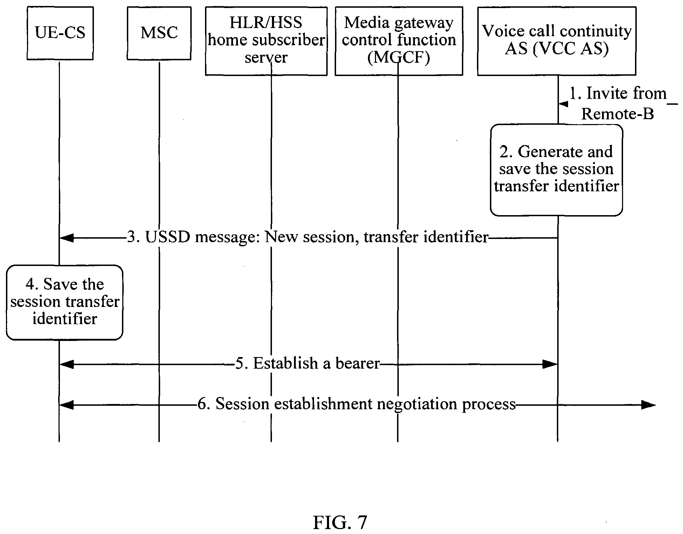

[Embodiment 4] The UE as a call establishes the IP-CAN session and the VCC AS allocates and directly delivers the transfer identifier to the UE through the ICCC message. Referring to Figure 7, the process includes the following steps.

In Step 1, the VCC AS receives a session request initiated by a remote user B to a local UE.

In Step 2, the VCC AS distributes a transfer identifier for the session.

In Step 3, the VCC AS notifies via the USSD message the UE that the remote user requests to establish a session, and the distributed transfer identifier of the session which distributed in step 2.

In Step 4, after receiving the notification of the transfer identifier of the session distributed by the VCC AS, the UE saves the transfer identifier of the session.

In Step 5, a bearer is established between the UE and the VCC AS, and the step and other steps may be performed in parallel or in any sequence. When the CS bearer has been established between the UE and the VCC AS, this step is optional.

In Step 6, the UE continues to finish the establishing process of the session with the remote user through the CS domain and the VCC AS.

### Notes:

In Step 3, in addition to the USSD message, the VCC AS and UE may interact through other ICCC messages, such as, a short message and a DTMF.

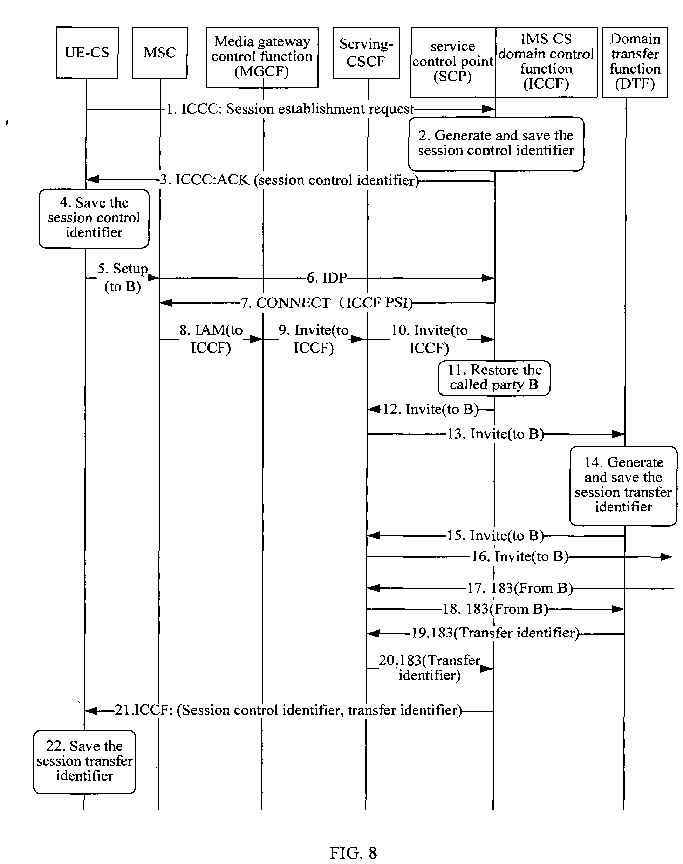

[Embodiment 5] The UE as a caller interacts by USSD message and establishes the CS session through the CAMEL. The DTF allocates transfer identifier and the ICCF delivers the transfer identifier through the ICCF message to the UE. Referring to Figure 8, the process includes the following steps.

In Steps 1-4, the UE notifies through the ICCC channel the ICCF that it intends to establish a new session, in which the ICCF distributes one particular control identifier for the session, and returns the control identifier to the UE in the acknowledgement message of the ICCC. The UE saves the control identifier.

In Steps 5-11, the UE initiates the flow of establishing the session to the user B in the CS domain, the CS domain call is redirected to the ICCF through the CAMEL, and here, the ICCF restores the real called user B according to an initial detection point (IDP) message triggered through the CAMEL to the session control protocol (SCP).

In Steps 12-13, the ICCF converts the message to the Invite message and sends the request to invite the user B, and the message is triggered to the DTF.

In Steps 14-16, the DTF distributes a transfer identifier of the session for the session, and continues to send the request to the called user B.

In Steps 17-19, the DTF receives the acknowledgement message of the called user B, adds the transfer identifier into the acknowledgement message, and continues the return.

In Steps 20-21, the ICCF receives the acknowledgement message with the added transfer identifier from the DTF, and then returns the control identifier and the transfer identifier to the UE by using the ICCC message channel.

In Step 22, the UE acquires the correct associated session of the transfer identifier by performing the association with the saved control identifier, and saves the transfer identifier.

### Notes:

When the CS domain bearer has been established between the UE and the ICCF, Steps 5-11 are optional.

Figure 8 only shows that the transfer identifier is returned to the ICCF through the 183 acknowledgement message, during the practical application, the transfer identifier may be returned to the UE through other acknowledgement messages, such as, a 180 message and a 200 OK message.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

The SCP and the ICCF in Figure 8 may be deployed in the same physical entity, or may be deployed separately. When being deployed together, they interact with each other through the information via the internal interface. When being separately deployed, they interact with each other through the information via the common alerting protocol (CAP), the mobile application part (MAP), the SIP, and other existing protocols and the private interfaces. The relation between the SCP and the ICCF in the remaining embodiments is the same as this embodiment, and thus are not repeated here.

When the ICCF is not deployed in the network, a CS adaptation function (CSAF) in the VCC AS finishes the delivery of the transfer identifier through the ICCC channel of the ICCF, and the subsequent embodiments are the same as this embodiment.

In this embodiment, after the association relation between the control identifier and the session is saved for the UE and the ICCF, subsequently the ICCF contains the control identifier in the ICCC notification, so as to indicate the session with which the transfer identifier distributed by the DTF is associated. In the practical application, between the UE and the ICCF, a plurality of sessions may be distinguished and distributed through the control identifier, and the message notification and the service control may be performed on each session by using the ICCC message. The detailed description may be obtained with reference to Steps 27-31 of Embodiment 25.

In the remaining embodiments, the distributed control identifier has the similar function, so it is not repeated herein.

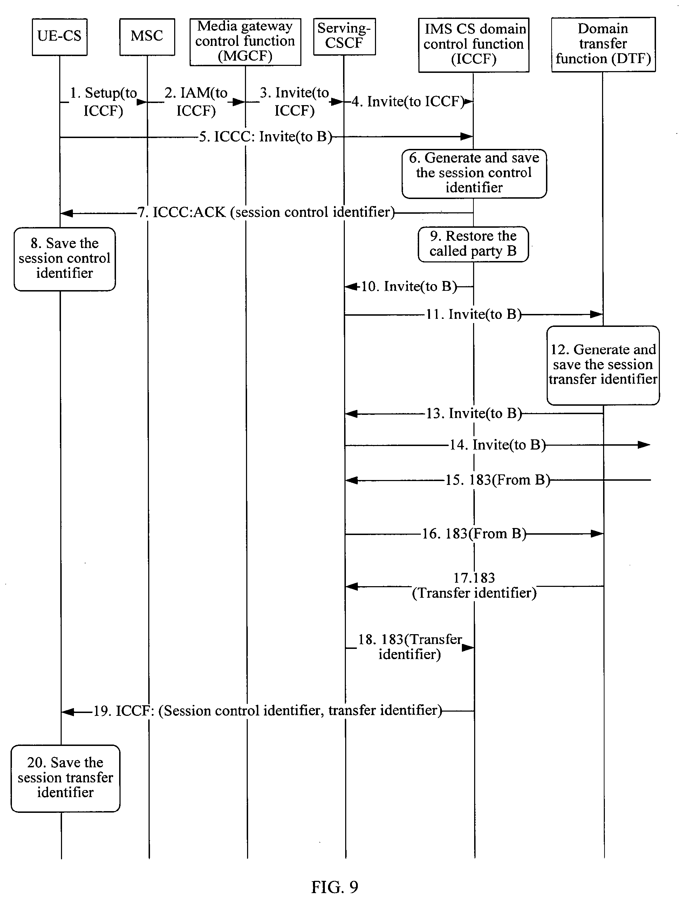

[Embodiment 6] The UE as a caller establishes the CS session by calling the PST of the ICCF. The DTF allocates transfer identifier and the ICCF delivers the transfer identifier through the ICCF message to the UE. Referring to Figure 9, the process includes the following steps.

In Steps 1-4, the UE initiates the flow of establishing the CS domain bearer to the ICCF in the CS domain.

In Steps 5-8, the UE notifies through the ICCC channel the ICCF that it intends to establish a new session. Here, the ICCF distributes a particular control identifier for the session, and returns the control identifier to the UE in the acknowledgement message of the ICCC. The UE saves the control identifier.

In Steps 9-11, the ICCF acquires the real called user B from the notification of the ICCC, converts the message to the Invite message, and sends the request to invite the user B, and the message is triggered to the DTF.

In Steps 12-14, the DTF distributes a transfer identifier of the session for the session, and continues to send the request to the called user B.

In Steps 15-17, the DTF receives the acknowledgement message of the called user B, adds the transfer identifier into the acknowledgement message, and continues the return.

In Steps 18-19, the ICCF receives the acknowledgement message with the added transfer identifier from the DTF, and then returns the control identifier and the transfer identifier to the UE by using the ICCC message channel.

In Step 20, the UE acquires the correct associated session of the transfer identifier by performing the association with the saved control identifier, and saves the transfer identifier.

### Notes:

When the CS domain bearer has been established between the UE and the ICCF, Steps 1-4 are optional.

Figure 9 only shows that the transfer identifier is returned to the ICCF through the 183 acknowledgement message, during the practical application, the transfer identifier may be returned to the UE through other acknowledgement messages, such as, a 180 message and a 200 OK message.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

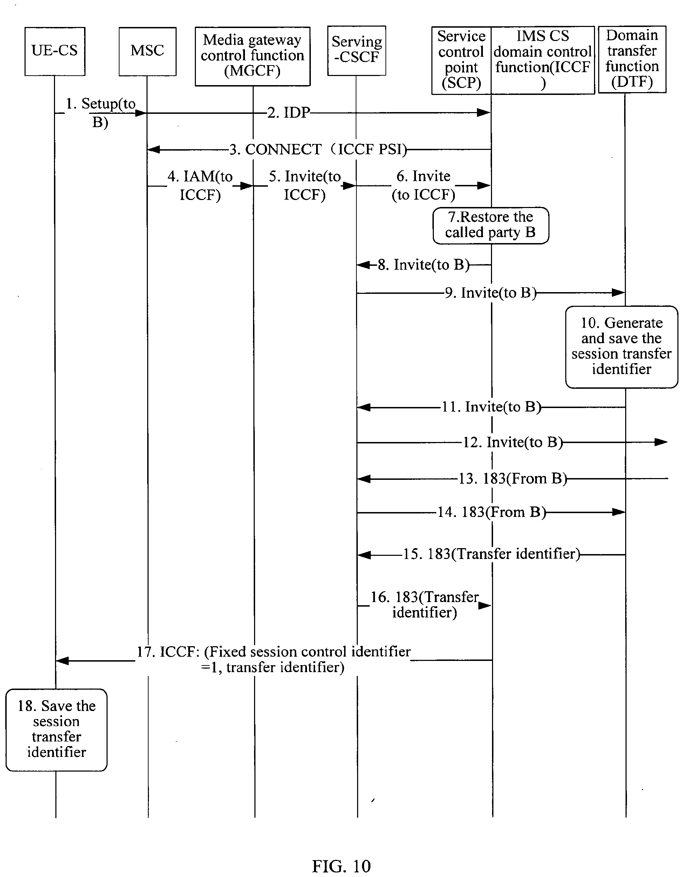

[Embodiment 7] The UE as a caller establishes the CS session through the CAMEL. The DTF allocates transfer identifier and the ICCF delivers the transfer identifier through the ICCF message to the UE. Referring to Figure 10, the process includes the following steps.

In Steps 1-7, the UE initiates the flow of establishing the session to the user B in the CS domain, the CS domain call is redirected to the ICCF through the CAMEL, and here, the ICCF restores the real called user B according to an IDP message triggered through the CAMEL to the SCP.

In Steps 8-9, the ICCF converts the message to the Invite message and sends the request to invite the user B, and the message is triggered to the DTF.

In Steps 10-12, the DTF distributes a transfer identifier of the session for the session, and continues to send the request to the called user B.

In Steps 13-15, the DTF receives the acknowledgement message of the called user B, adds the transfer identifier into the acknowledgement message, and continues the return.

In Steps 16-17, the ICCF receives the acknowledgement message with the added transfer identifier from the DTF, and then returns a special fixed control identifier (for example, fixedly being 1) and the transfer identifier to the UE by using the ICCC message channel.

In Step 18, after acquiring the ICCF message, as the fixed control identifier is always associated with the CS domain session being established, the UE acquires and saves the association relation between the transfer identifier and the session.

### Notes:

The special session control identifier may be fixedly a certain value negotiated by the ICCF and the UE, and may be omitted in the ICCC message. At the same time, in order to avoid confusion, when the session is established in Interworking, the ICCF will reject new sessions.

Figure 10 only shows that the transfer identifier is returned to the ICCF through the 183 acknowledgement message, during the practical application, the transfer identifier may be returned to the UE through other acknowledgement messages, such as, a 180 message and a 200 OK message.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

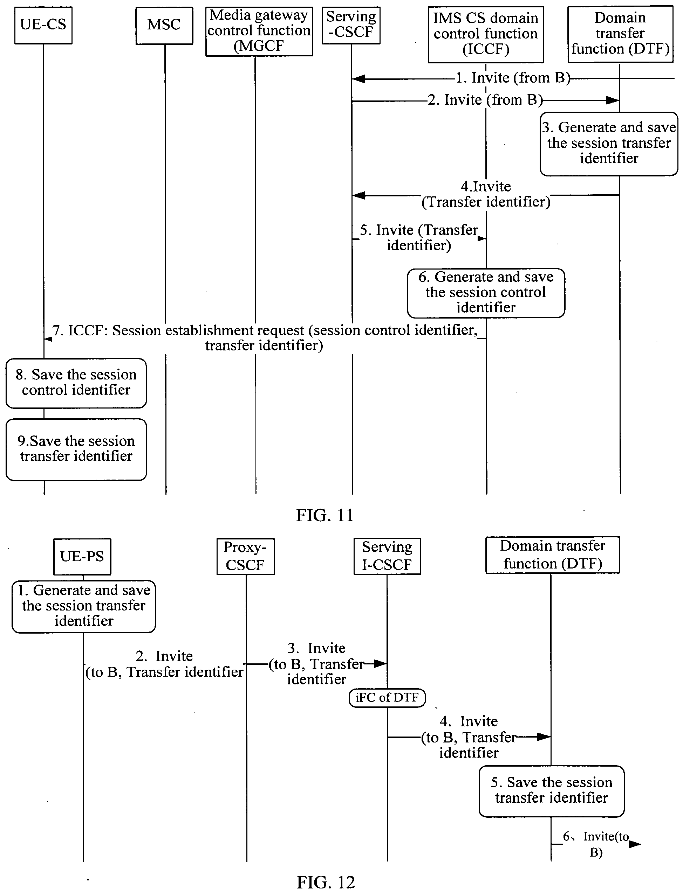

[Embodiment 8] The UE as a call establishes the CS session. The DTF allocates transfer identifier and the ICCF delivers the transfer identifier through the ICCF message to the UE. Referring to Figure 11, the process includes the following steps.

In Steps 1-2, the DTF receives a session request initiated by a remote user B to the local UE.

In Step 3, the DTF distributes a transfer identifier for the session.

In Step 4, the DTF adds the transfer identifier of the session into the Invite message.

In Step 5, the Invite message is routed to the ICCF.

In Step 6-7, the ICCF notifies through the ICCC channel the UE that the new session is to be established and contains the control identifier and the transfer identifier. In Steps 8-9, the UE saves the control identifier and the transfer identifier.

### Notes:

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

[Embodiment 9] The UE as a caller establishes the IP-CAN session. The UE allocates transfer identifier and delivers the transfer identifier to the DTF. Referring to Figure 12, the process includes the following steps.

In Steps 1-4, when the UE gets access to the IP-CAN, the user needs to initiate a session to B, here the UE distributes a transfer identifier for the session, and sends the transfer identifier by containing the transfer identifier in an Invite message.

In Steps 5-6, the session establishment request is routed to the DTF, if the DTF finds that it is a new call, the DTF saves the transfer identifier, deletes the identifier information from the Invite message, and continues to send the message to the user B.

### Notes:

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

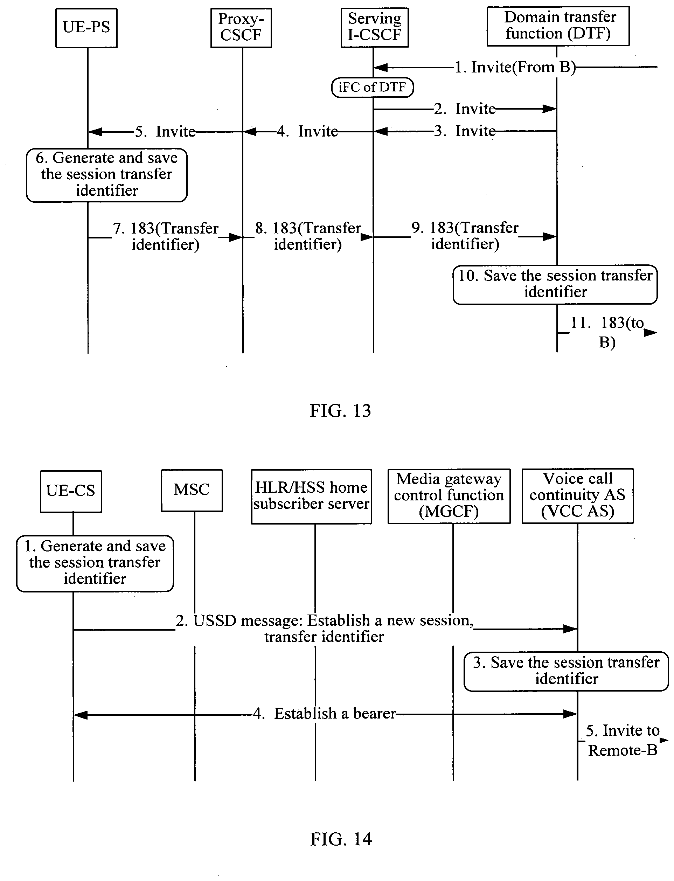

[Embodiment 10] The UE as a call establishes the IP-CAN session. The UE allocates transfer identifier and delivers the transfer identifier to the DTF. Referring to Figure 13, the process includes the following steps.

In Steps 1-5, the DTF receives a session request initiated by a remote user B to the local UE, and continues to route the request to the UE.

In Step 6, the UE distributes a transfer identifier for the session.

In Steps 7-9, the UE adds the transfer identifier of the session into the acknowledgement message of the SIP, and sends the acknowledgement message to the DTF.

In Steps 10-11, the DTF saves the acquired transfer identifier, deletes the identifier information from the acknowledgement message, and continues to send the message to the user B.

### Notes:

Figure 13 only shows that the transfer identifier is returned to the DTF through the 183 acknowledgement message, during the practical application, the transfer identifier may be returned to the DTF through other acknowledgement messages, such as, a 180 message and a 200 OK message.

The transfer identifier is not only a dynamic VDI/VDN, but also an identifier independent of the VDI/VDN, and may be distributed and delivered by containing by using the manner described in this embodiment. The subsequent embodiments are the same as this embodiment, and thus are not repeated here.

[Embodiment 11] The UE as a caller interact through the USSD message and establishes the CS session. The UE allocates transfer identifier and directly delivers the transfer identifier to the VCC AS through the ICCC message. Referring to Figure 14, the process includes the following steps.

In Step 1, when the UE gets access to the CS, the user needs to initiate one session to B, and here the UE distributes a transfer identifier for the session, and prepares to initiate the call.

In Step 2, the UE notifies through the USSD message the VCC AS that the new session to the remote end is to be established and notifies the VCC AS of the distributed transfer identifier of the session.

In Step 3, after receiving the notification of the distributed transfer identifier of the session from the UE, the VCC AS saves the transfer identifier of the session.

In Step 4, a bearer is established between the UE and the VCC AS, and the step and other steps may be performed in parallel or in any sequence. When the CS bearer has been established between the UE and the VCC AS, this step is optional.

In Step 5, the VCC AS continues to route the call request to the next hop towards the remote user B.

### Notes:

In Step 2, in addition to the USSD message, the VCC AS and UE may interact with each other through other ICCC messages, such as a short message and a DTMF.

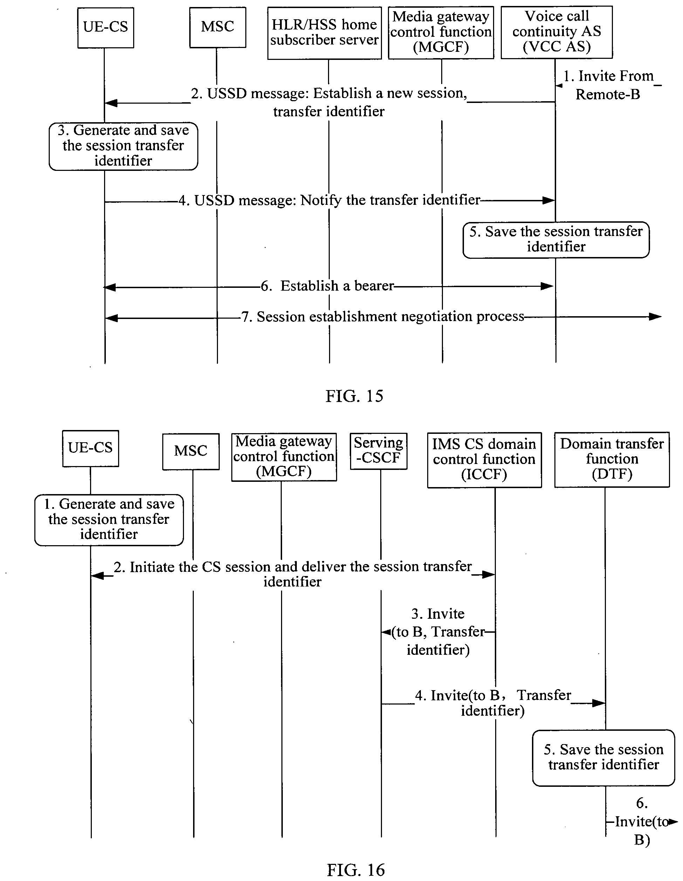

[Embodiment 12] The UE as a call interact through the USSD message and establishes the CS session. The UE allocates transfer identifier and directly delivers the transfer identifier to the VCC AS through the USSD message. Referring to Figure 15, the process includes the following steps.

In Step 1, the VCC AS receives a session request initiated by a remote user B to a local UE.

In Step 2, the VCC AS notifies through the USSD message the UE that the remote user requests to establish a session.

In Step 3, the UE distributes a transfer identifier for the session.

In Step 4, the UE notifies through the USSD message the VCC AS that the new session to the remote end is to be established and notifies the VCC AS of the distributed session transfer identifier corresponding to the session. In addition to the USSD message, the DTF may notify the UE through other ICCC messages, such as a short message and a DTMF.

In Step 5, after receiving the notification of the distributed session transfer identifier from the UE, the VCC AS saves the transfer identifier of the session.

In Step 6, a bearer is established between the UE and the VCC AS, and the step and other steps may be performed in parallel or in any sequence. When the CS bearer has been established between the UE and the VCC AS, this step is optional.

In Step 7, the UE continues to finish the establishing process of the session with the remote user through the CS domain and the VCC AS.

### Notes:

In Steps 2 and 4, in addition to the USSD message, the VCC AS and UE may interact with each other through other ICCC messages, such as the short message and the DTMF.

[Embodiment 13] The UE as a caller establishes the CS session and the UE allocates and delivers the transfer identifier to the DTF through the ICCC message. Referring to Figure 16, the process includes the following steps.

In Step 1-2, when the UE gets access to the CS domain, the user needs to initiate a session to B, here the UE distributes a transfer identifier for the session, and sends the transfer identifier by containing the transfer identifier in the call establishment request. According to the manner of establishing the session, the UE may deliver the session transfer identifier to the ICCF in various manners, and Embodiments 15-18 show several possible manners.

In Steps 3-4, the ICCF in the routing path receives the call request, and performs the conversion according to the demand, so as to ensure that the transfer identifier is sent to the DTF by being contained in the SIP message.

In Step 5-6, the session establishment request is routed to the DTF, if the DTF finds out that it is a new call, the DTF saves the transfer identifier, deletes the identifier information from the Invite message, and continues to send the message to the user B.

### Notes:

The UE notifies the ICCF by containing the transfer identifier through an ICCC message, or through user information (UUI).

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the SDP message content of the text format.

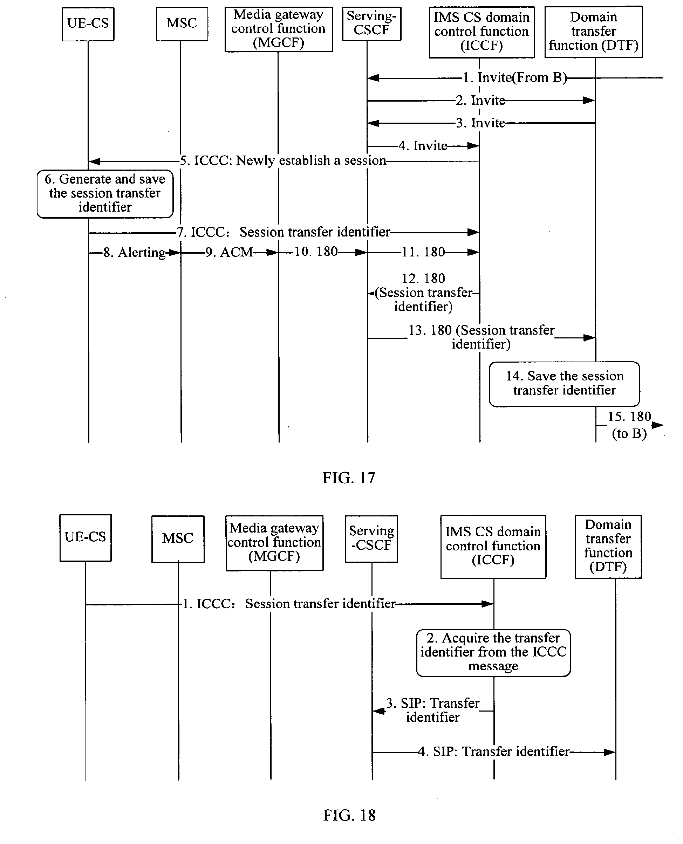

[Embodiment 14] The UE as a call establishes the CS session and the UE allocates and delivers the transfer identifier to the DTF through the ICCC message. Referring to Figure 17, the process includes the following steps.

In Steps 1-5, the DTF receives a session request initiated by a remote user B to the local UE, and continues to route the request to the UE through the ICCF.

In Step 6, the UE distributes a transfer identifier for the session.

In Step 7, the UE adds the transfer identifier of the session into the acknowledgement message of the ICCC, and sends the acknowledgement message to the ICCF.

In Steps 8-11, if a CS domain bearer is required to be established between the ICCF and the UE in the session, the UE returns the Alerting acknowledgement during the process of establishing the bearer.

In Step 12, after acquiring the acknowledgement of the UE, the ICCF adds the transfer identifier into the 180 message, and continues to return the acknowledgement to the user B.

In Steps 13-15, the acknowledgement message is routed to the DTF; the DTF saves the acquired transfer identifier, deletes the identifier information from the acknowledgement message, and continues to send the message to the user B.

### Notes:

If it is not necessary to establish the CS domain bearer, Steps 8-11 are optional, and the transfer identifier is directly returned in the ICCC acknowledgement message.

Figure 17 only shows that the transfer identifier is returned to the UE through the 180 acknowledgement message, during the practical application, the transfer identifier may be returned to the UE through other acknowledgement messages, such as a 200 OK message.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the User-Agent or the Server header field), or is contained in the session description protocol (SDP) message content of the text format.

[Embodiment 15] The UE delivers the transfer identifier to the ICCF in the ICCC manner. Referring to Figure 18, the process includes the following steps.

In Step 1, the UE notifies the ICCF by containing the transfer identifier of the session through the ICCC channel.

In Steps 2-4, the ICCF acquires the transfer identifier through the ICCC message, if the ICCC message is associated with an existing session, the ICCF needs to acquire the correct session from the control identifier in the ICCC message, then notifies the DTF by containing the transfer identifier in the SIP message in the session.

This embodiment may be applicable to Step 2 in Embodiment 13.

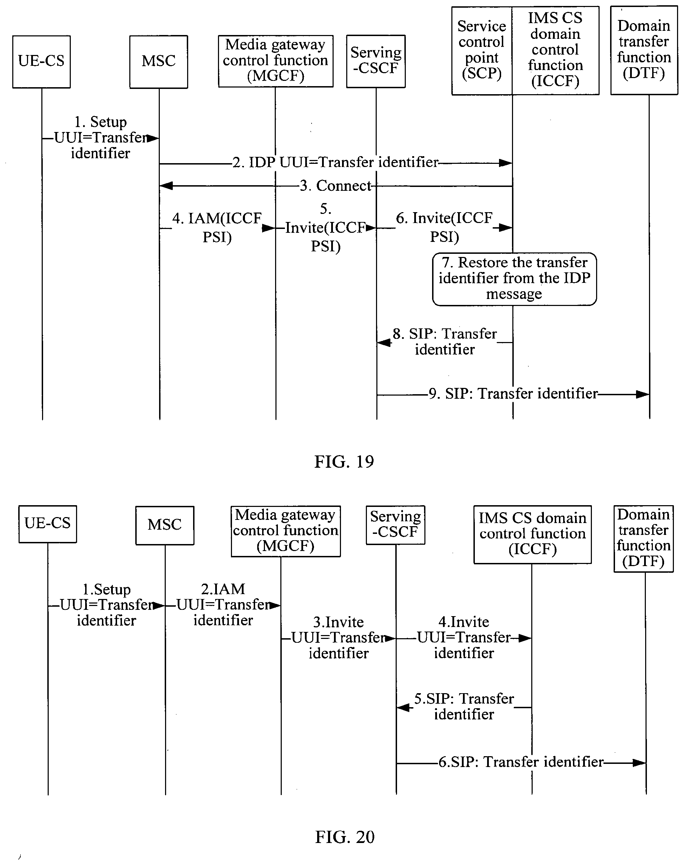

[Embodiment 16] The UE delivers the transfer identifier to the ICCF in the IDP triggering manner of the UUI. Referring to Figure 19, the process includes the following steps.

In Step 1, the UE contains an UUI cell in the SETUP message of initiating the session, and the UUI content is the transfer identifier of the session.

In Step 2, the mobile transferring centre (MSC) triggers a CAMEL intelligent service, and notifies the ICCF through the IDP message after passing through the SCP.

In Steps 3-6, the ICCF notifies the MSC to redirect to the PSI of the ICCF, and subsequently routes to the ICCF by establishing the call interworking between the CS domain and the IMS

In Steps 7-9, ICCF converts the message to the SIP message according to the transfer identifier in the recorded IDP message, and notifies the DTF by containing the transfer identifier in the SIP message.

### Notes:

If the ICCF is not deployed in the network, the SCP and the DTF directly interact with each other, and the distributed direction changed is the PSI of the DTF.

This embodiment may be applicable to Step 2 in Embodiment 13.

This embodiment may be applicable to Embodiment 21, and is adapted to deliver the transfer identifier (in Steps 1-7).

[Embodiment 17] The UE delivers the transfer identifier to the ICCF in the MGCF converting manner of the UUI. Referring to Figure 20, the process includes the following steps.

In Steps 1-2, the UE contains an UUI cell in the SETUP message of initiating the session, and the UUI content is the transfer identifier of the session. The message is forwarded to the MGCF after passing through the MSC.

In Step 3, the MGCF converts the ISUP message containing the UUI message to the SIP message.

In Steps 4-6, the SIP message is routed to the ICCF, the ICCF judges that the UUI content contained in the SIP message is the transfer identifier, so as to notify the DTF after converting to contain the transfer identifier in other header field SIP message, or notify the DTF by containing the transfer identifier in the UUI without conversion.

### Notes:

If the ICCF is not deployed in the network, the SIP message converted by the MGCF directly reaches the DTF.

This embodiment may be applicable to Step 2 in Embodiment 13.

This embodiment may be applicable to Embodiment 21, and is adapted to deliver the transfer identifier (in Steps 1-7).

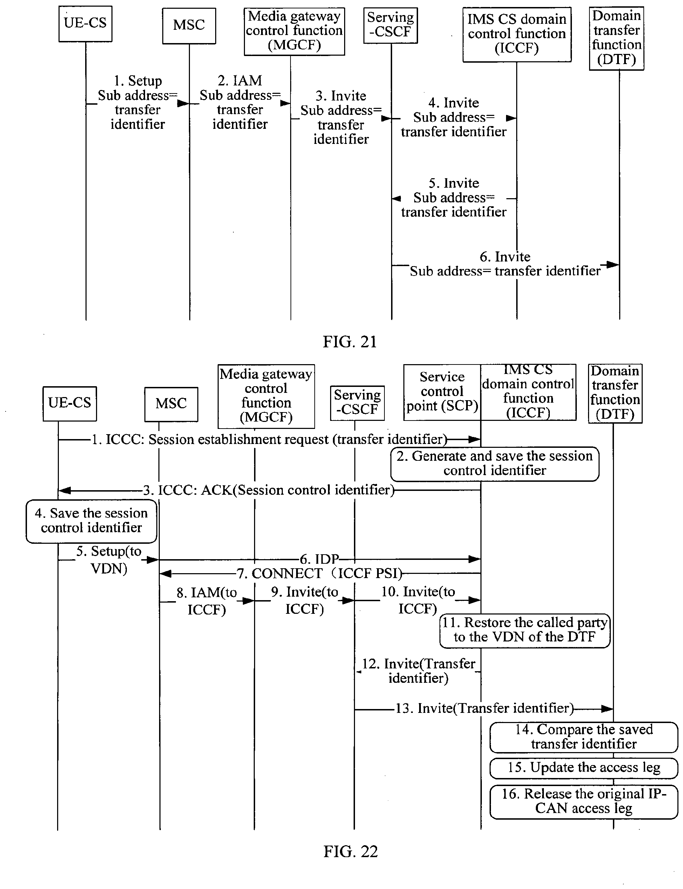

[Embodiment 18] The UE delivers the transfer identifier to the ICCF in an MGCF converting manner of the sub address. Referring to Figure 21, the process includes the following steps.

In Step 1-2, the UE contains the sub address in the SETUP message of initiating the session, and the sub address is the transfer identifier of the session. The message is forwarded to the MGCF after passing through the MSC.

In Step 3, the MGCF converts the ISUP message containing the sub address to the SIP message.

In Steps 4-6, the SIP message is routed to the ICCF, and is forwarded to the DTF.

### Notes:

If the ICCF is not deployed in the network, the SIP message converted by the MGCF directly reaches the DTF.

In addition to the sub address, the different called address capable of being routed to the DTF may be directly used between the UE and the DTF, so as to identify the different transfers performed on the different session, and the conversion process is similar, thus is not repeated here.

This embodiment may be applicable to Step 2 in Embodiment 13.

This embodiment may be applicable to Embodiment 21, and is adapted to deliver the transfer identifier (in Steps 1-7).

[Embodiment 19] The UE initiates a multi-session transfer from the IP-CAN to the CS domain and delivers the transfer identifier to the ICCF through the ICCF. The UE establishes the session through the VDN and CAMEL. Referring to Figure 22, the process includes the following steps.

In Steps 1-4, the UE notifies through the ICCC channel the ICCF that a new session is to be established and contains the transfer identifier of the session. Here, the ICCF distributes a particular control identifier for the session, and returns the control identifier to the UE by containing the control identifier in the acknowledgement message of the ICCC. The UE saves the control identifier.

In Steps 5-11, the UE initiates a flow of establishing the session to the VDN of the DTF in the CS domain, the CS domain call is redirected to the ICCF through the CAMEL, and here, the ICCF restores the real called party according to an IDP message triggered to the SCP through the CAMEL.

In Steps 12-13, the ICCF converts the message to the Invite message, sends the request to the DTF, and contains the transfer identifier sent from the UE.

In Step 14, the DTF judges that the transfer request is a transfer request for an existing session leg according to the destination of the Invite message being the self VDN and the contained transfer identifier.

In Step 15, here, the DTF updates the access leg information, and initiates a media negotiation with the remote user.

In Step 16, the DTF releases the old IP-CAN access leg.

### Notes:

When the CS domain bearer has been established between the UE and the ICCF, Steps 5-11 are optional.

The transfer identifier may be delivered together with a certain specific session initial establishment message as one message (for example, the Invite message of the SIP or the similar session establishment message in the ICCC), and may also be delivered in the session establishment process message (for example, the SIP 180 message or the similar message in the ICCC), or is delivered as an independent message (for example, the SIP Info or the similar message in the ICCC). The subsequent embodiments are the same as this embodiment, and thus are not repeated here.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the Replace header field), or is contained in the SDP message content of the text format.

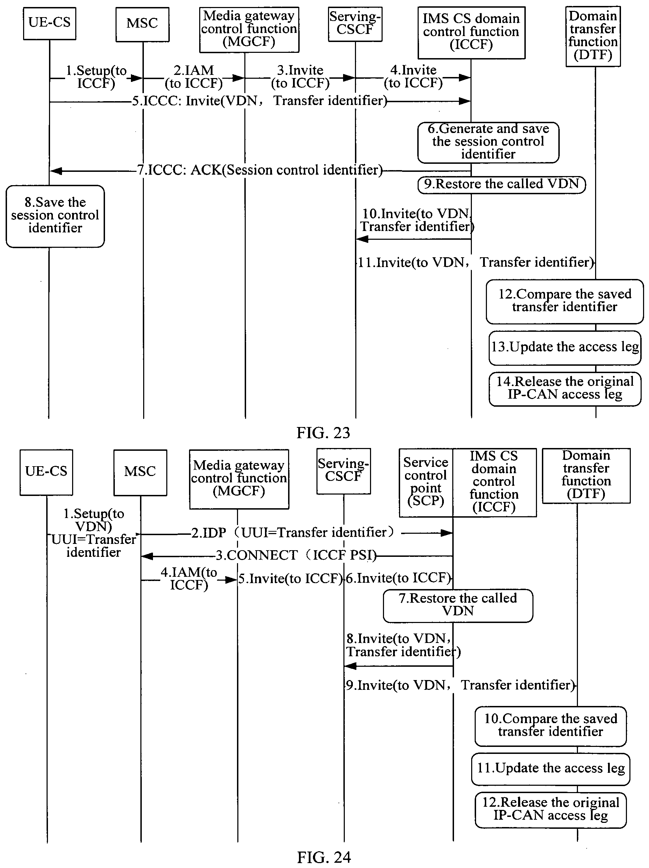

[Embodiment 20] The UE initiates a multi-session transfer from the IP-CAN to the CS domain and delivers the transfer identifier and VDN to the ICCF. The UE establishes the session through the VDN and CAMEL. Referring to Figure 23, the process includes the following steps.

In Steps 1-4, the UE initiates the flow of establishing the CS domain bearer to the ICCF in the CS domain.

In Steps 5-8, the UE notifies through the ICCC channel the ICCF that a session to the VDN of the DTF is to be established. Here, the ICCF distributes a particular control identifier for the session, and returns the control identifier to the UE by containing the control identifier in the acknowledgement message of the ICCC. The UE saves the control identifier.

In Steps 9-11, the ICCF acquires the real called VDN from the notification of the ICCC, converts the message to the Invite message, and sends the transfer identifier to the DTF by containing the transfer identifier in the Invite message.

In Step 12, the DTF judges that the transfer request is a transfer request for an existing session leg according to the destination of the Invite message being the self VDN and the contained transfer identifier.

In Step 13, here, the DTF updates the access leg information, and initiates a media negotiation with the remote user.

In Step 14, the DTF releases the old IP-CAN access leg.

### Notes:

When the CS domain bearer has been established between the UE and the ICCF, Steps 1-4 are optional.

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the Replace header field), or is contained in the SDP message content of the text format.

[Embodiment 21] The UE initiates a multi-session transfer from the IP-CAN to the CS domain and delivers the transfer identifier and VDN to the ICCF through the UUI and CAMEL. The UE establishes the session through the VDN and CAMEL. Referring to Figure 24, the process includes the following steps.

In Step 1, the UE initiates the call to the VDN of the DTF in the CS domain, and contains the transfer identifier through the UUI cell of the Setup message.

In Steps 2-7, the call is triggered through the CAMEL on the MSC, and the CS domain call is redirected to the ICCF, here, the ICCF restores the real called VDN and the transfer identifier contained in the UUI according to an IDP message triggered through the CAMEL to the SCP.

In Steps 8-9, the ICCF converts the message to the Invite message and sends the transfer identifier to the DTF by containing the transfer identifier in the Invite message.

In Step 10, the DTF judges that the transfer request is a transfer request for an existing session leg according to the destination of the Invite message being the self VDN and the contained transfer identifier.

In Step 11, here, the DTF updates the access leg information, and initiates a media negotiation with the remote user.

In Step 12, the DTF releases the old IP-CAN access leg.

### Notes:

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the Replace header field), or is contained in the SDP message content of the text format.

This embodiment only shows that the transfer identifier is contained in the UUI and is triggered to the ICCF through the IDP, during the practical application, any one of the realizing manners in Embodiments 16-18 may be used.

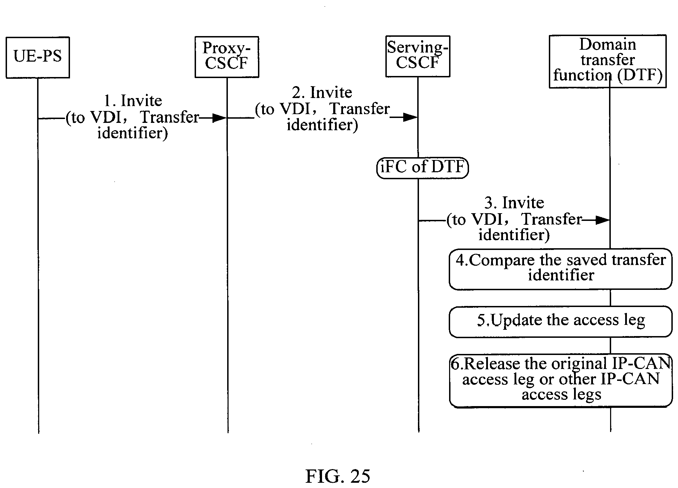

[Embodiment 22] The UE initiates a multi-session transfer from the CS domain to the IP-CAN and deliver the transfer identifier to the DTF through SIP. Referring to Figure 25, the process includes the following steps.

In Steps 1-3, the UE initiates a call to the VDI of the DTF in the IP-CAN domain, and contains the transfer identifier. The Invite message is routed to the DTF according to the subscription information.

In Step 4, the DTF judges that the transfer request is a transfer request for an existing session leg according to the destination of the Invite message being the self VDN and the contained transfer identifier.

In Step 5, here, the DTF updates the access leg information, and initiates a media negotiation with the remote user.

In Step 6, the DTF releases the old IP-CAN access leg or other original IP-CAN access legs.

### Notes:

The transfer identifier is contained by newly defining a header field or a parameter of the SIP message (for example, newly defining a header field DT-ID, or newly adding a parameter Transfer-ID to a header field To), or is contained by extending the original header field or the parameter (for example, the Replace header field), or is contained in the SDP message content of the text format.

The session is not only transferred between the circuit domain and the packet domain, but also transferred between different IP-CANs. The transfer between different packet access domains is also called the domain transfer in the present invention. Other embodiments are the same as this embodiment, and thus are not repeated here.

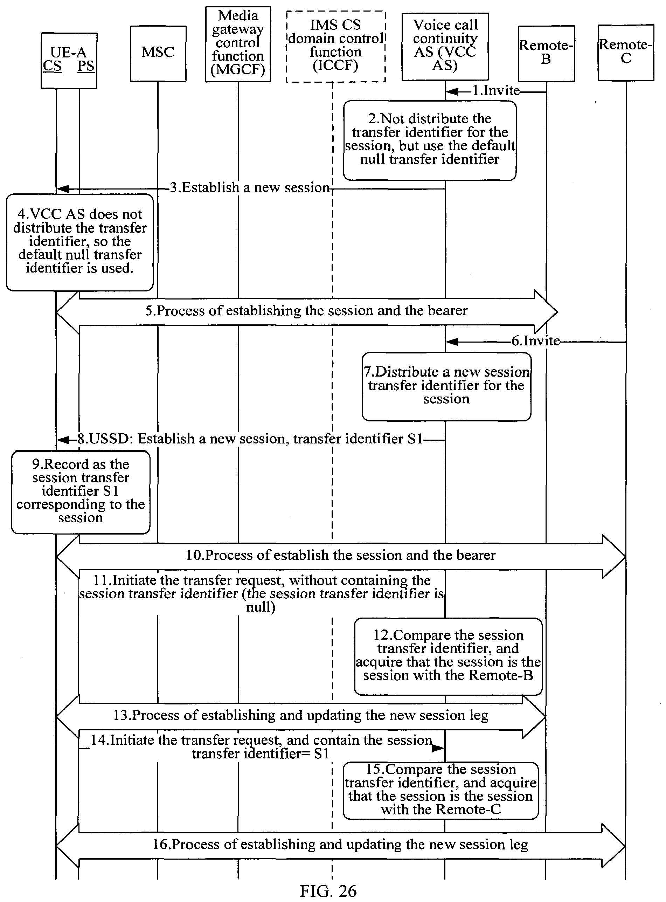

[Embodiment 23] The default transfer identifier is adapted to transfer a session. Referring to Figure 26, the process includes the following steps.

Being configured in advance or through other means, if the VCC AS does not allocate the session transfer identifier for the session and notifies the UE, the UE uses the null value (or other default values) the same as the configuration on the VCC AS as the default transfer identifier of the session.

In Step 1, the VCC AS receives a session request initiated by a remote user B to the local UE-A.

In Step 2, based on the judgment that here the UE-A does not have the session or other judgment result, the VCC AS does not allocate a distinct transfer identifier for the session, but uses the default null value as the transfer identifier of the session. The default transfer identifier is not delivered to the UE.

In Step 3, according to the domain selection result, the VCC AS delivers the call request to the UE through the CS domain. The call request may be delivered in an Interworking manner or a USSD interacting manner. The call establishment request does not include the default transfer identifier of the session (the message may not contain the parameter identifying the transfer identifier, or may contain the parameter but the value of the parameter is null).

In Step 4, the UE receives a new session establishment request, and here the VCC AS does not distribute the transfer identifier for the session, so that the UE similarly uses the default null value as the transfer identifier of the session.

In Step 5, the UE-A finishes the establishment of the bearer and the session with the Remote-B through the CS domain and the VCC AS etc.

Here, a session is established between the UE-A and the Remote-B in the CS domain.

In Step 6, the VCC AS receives a session request initiated by another remote user Remote-C to the local UE.

In Step 7, the VCC AS distributes a transfer identifier S1 for the session.

In Step 8, the VCC AS notifies through the USSD message the UE-A that a session is to be established and session transfer identifier S1 corresponding to the session.

In Step 9, after receiving the notification of the distributed session transfer identifier from the VCC AS, the UE saves the session transfer identifier S1.

In Step 10, the UE-A finishes the establishment of the bearer and the session with the Remote-C through the CS domain and the VCC AS etc.

Here, two sessions are established between the UE-A and the Remote-B and between the UE-A and the Remote-C in the CS domain at the same time.

In Step 11, the subsequent access environment is changed, and the UE-A initiates the domain transfer request in the PS domain. The UE-A determines to initiate to transfer the session between the UE-A and the Remote-B to the PS domain, and the session uses the default null transfer identifier, so UE-A does not contain the transfer identifier in the transfer request (the message does not contain the parameter identifying the transfer identifier, or contains the parameter but the value of the parameter is null).

In Step 12, after the request reaches the VCC AS, the VCC AS restores the correct session according to the saved control identifier and the transfer identifier. Here, the transfer request does not contain the transfer identifier, so the VCC AS acquires that the transfer request requests to transfer the session between the UE-A and the Remote-B through matching by using the default null transfer identifier.

In Step 13, the VCC AS coordinates to finish the establishing of the new session leg, the updating of the media port, and the releasing of the old session leg etc.

Here, the session between the UE-A and the Remote-B in the CS domain is transferred to the PS domain.

In Step 14, the UE-A initiates transferring the session between the UE-A and the Remote-C to the PS domain. The UE-A contains the transfer identifier S1 corresponding to the session in the transfer request.

In Step 15, after the request reaches the VCC AS, the VCC AS restores the correct session according to the saved control identifier and the transfer identifier. Here, the transfer request contains the transfer identifier S1, so the VCC AS acquires that the transfer request requests to transfer the session between the UE-A and the Remote-C by matching.

In Step 16, the VCC AS coordinates to finish the establishing of the new session leg, the updating of the media port, and the releasing of the old session leg etc.

Here, the two sessions of the UE-A are transferred to the PS domain.

### Notes:

In addition to the USSD message, the VCC AS and UE may interact with each other through other ICCC messages, such as a short message and a DTMF.

The session establishment of the two sessions may be performed in parallel or in any sequence. The session transfer of the two sessions may also be performed in parallel or in any sequence.

The situation of the UE distributing the session transfer identifier or transferring the session from the PS domain to the CS is similar to the above, and thus is not repeated here.

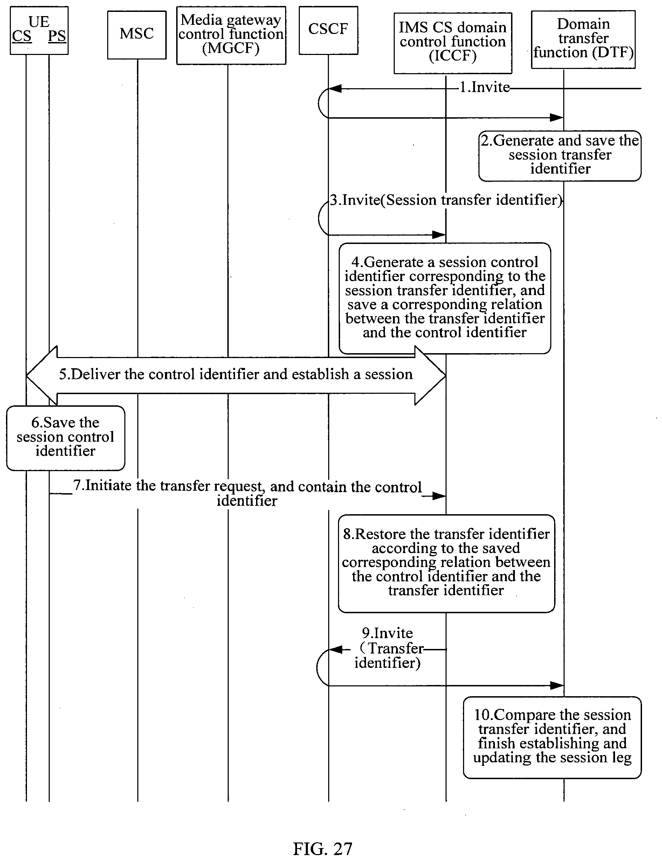

[Embodiment 24] The ICCF performs a communication identifier (CID)/ silo type identifier (STID) conversion adaptation in order to transfer the session. Referring to Figure 27, the process includes the following steps.

In Step 1, the DTF receives a session request initiated by a remote user B to the local UE.

In Step 2, the DTF distributes a transfer identifier for the session.

In Step 3, the DTF delivers the distributed transfer identifier of the session to the UE direction by containing the transfer identifier in the SIP message.

In Step 4, after the message is delivered to the ICCF, the ICCF generates a session control identifier corresponding to the session transfer identifier, and save a corresponding relation between the transfer identifier and the control identifier.

In Step 5, the control identifier is delivered and the CS session is established between the ICCF and the UE.

In Step 6, the UE saves the control identifier corresponding to the session.

In Step 7, the subsequent access environment is changed, and the UE initiates the domain transfer request by containing the control identifier of the session in the PS domain.

In Step 8, after the request reaches the ICCF, the ICCF restores the transfer identifier of the session according to the saved corresponding relation between the control identifier and the transfer identifier.

In Step 9, the ICCF sends the transfer identifier of the session to the DTF by containing the transfer identifier in the SIP message.

In Step 10, after receiving the transfer request, the DTF compares the transfer identifier of the session, identifies the session to the transferred, and finishes the establishment and the updating of the new session leg etc.

### Notes:

This embodiment only shows the situation that the session is established in the CS domain and is transferred to the PS domain, and the situation that the session is established in the PS domain and is transferred to the CS domain is the same as the above.

This embodiment only shows the situation that the DTF distributes the transfer identifier, and the situation that the UE distributes the transfer identifier is the same as the above.

[Embodiment 25] The multi-session transferred from the IP-CAN to the CS domain, and the process on the media port performed by the ICCF are described.

When the UE transfers a plurality of sessions from the IP-CAN to the CS domain, one CS domain bearer is established between the UE and the ICCF, so it is necessary to solve the problem of the media connection between the CS domain bearer and the plurality of remote users. This embodiment mainly describes the media processing process performed by the ICCF, and the transfer initiation flow may be any one of the above embodiments.

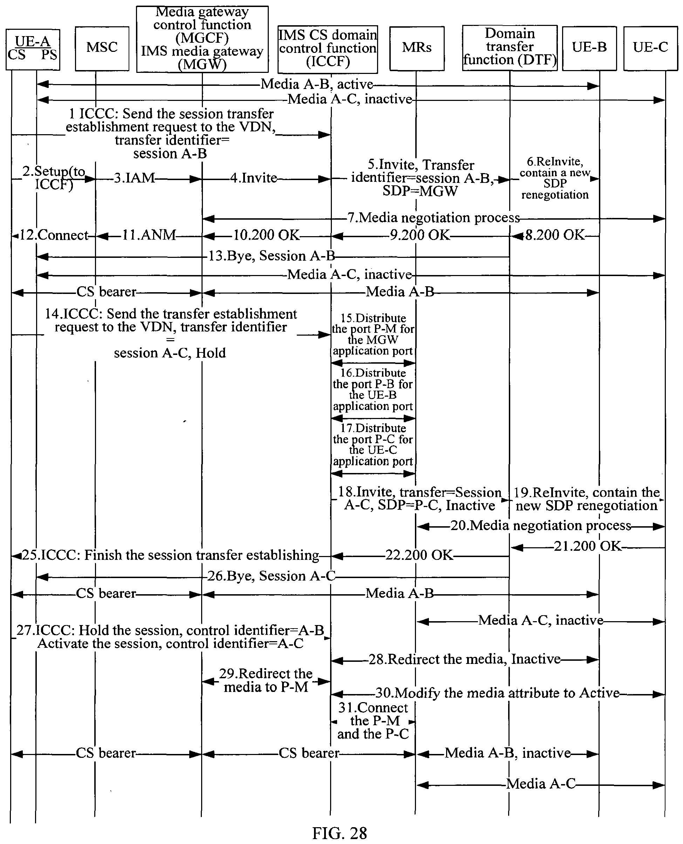

The UE-A establishes two sessions with the UE-B and the UE-C in the IP-CAN domain, the session A-B is in an activated state, and the session A-C is in a hold state. Referring to Figure 28, the process includes the following steps.

In Steps 1-4, the UE initiates a first session transfer request in the CS domain, and contains the transfer identifier of the session A-B, as the CS domain bearer does not exist, the UE initiates the establishment of the CS domain bearer at the same time, and the transfer request is firstly routed to the ICCF.

In Step 5, the ICCF contains the MGW media information and the transfer identifier during the process of establishing the CS domain bearer, and sends to the DTF through the Invite message.

In Steps 6-13, the DTF identifies that the session leg of the session A-B is to be transferred according to the transfer identifier, so as to initiate the negotiation with the user B, and the session leg of the IP-CAN is released after the access leg of the CS domain is established.

Here, the media of the session A-B establishes the connection through the CS domain bearer and is in the activated state, and the media of the session A-C is connected through the IP-CAN, and is in the hold state.

In Step 14, the UE initiates a second transfer request in the CS domain, contains the transfer identifier of the session A-C, and indicates that the session is in the HOLD state.

In Steps 15-17, after the ICCF receives the session transfer request, one session has been existing in the CS domain, so that the MGW port cannot be directly adapted to establish the media connection with the UE-C, so here the ICCF needs to apply the port for each part of the session on a media resource server (MRS).

In Step 18, the ICCF contains the media portion information distributed for the UE-C and assigns the media attribute to Inactive, and the transfer identifier, and sends them to the DTF through the Invite message.

In Steps 19-26, the DTF identifies that the session leg of the session A-C is to be transferred according to the transfer identifier, so as to initiate the negotiation with the user C, and the session leg of the IP-CAN is released after the access leg of the CS domain is established.

Here, the media of the session A-B establishes the connection through the CS domain bearer and is in the activated state, and in the media of the session A-C, the UE-C is connected to the MRS, and is in the hold state.

In Steps 27-31, subsequently, the UE needs to call the user C, and hold the call with the user B, so as to initiate a session supplementary service control HOLD request to the ICCF through the ICCC. After the ICCF receives the message, the MGW media is redirected to the MRS, the media stream of the UE-B is redirected to the MRS and is modified to the non-activated state, the media from the UE-C to the MRS is activated, and the ports connected to the MGW and the UE-C in the MRS are connected.

Here, the media of the session A-C establishes the connection through the CS domain bearer and the MRS and is in the activated state, and in the media of the session A-B, the UE-B is connected to the MRS, and is in the hold state.

### Notes:

The user initiates the transfer request in the CS domain through not only the manner in the drawing but also any one of the establishing manners of the above embodiments.

Steps 15-17 may be performed in parallel in any sequence.

The MRS in Figure 28 may be a multimedia resource function processor (MRFP) controlled by a multimedia resource function controller (MRFC), or may be the MGW controlled by the MGCF. When the MRS in the drawing is the MGW, the connection between the MGW and the MRS in the above flow is an internal connection, and this step is optional.

In Figure 28, the port applied in the MRS may be the independent port or the port connected to the same audio mixing resource. When it is the port connected to the same audio mixing resource, the process of connecting the ports P-C and P-M is optional.

This embodiment describes the process on the media port performed by the ICCF when the plurality of sessions is transferred from the IP-CAN to the CS. It is also applicable to the situation that a session exists in the CS domain, and a subsequent session is transferred from the IP-CAN to the CS.

[Embodiment 26] The multi-session transferred from the CS domain to the IP-CAN, and the process on the media port performed by the ICCF are described.

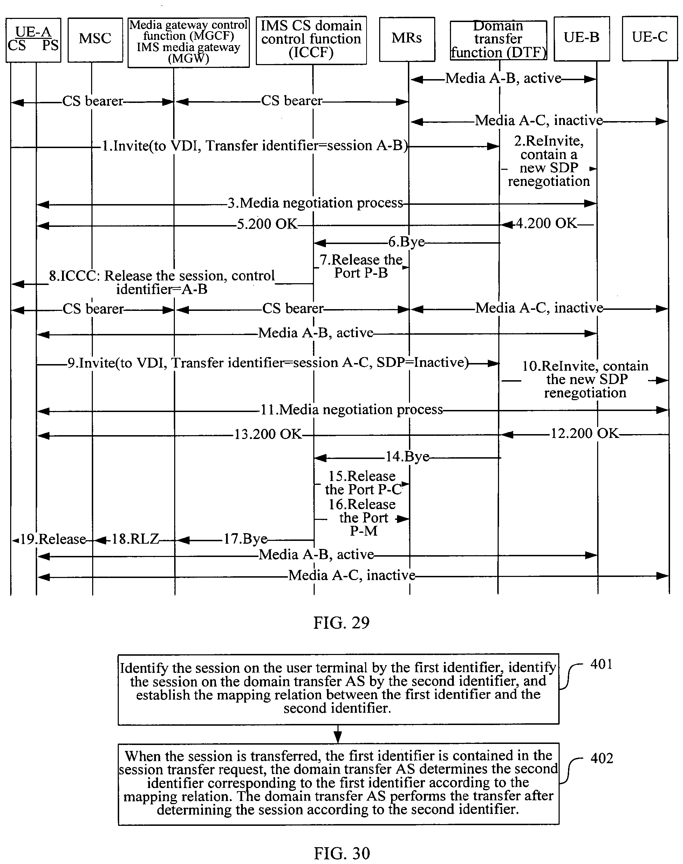

The UE-A establishes the two sessions with the UE-B and the UE-C in the CS domain, the session A-B is in an activated state, and the session A-C is in a hold state. Referring to Figure 29, the process includes the following steps.

In Step 1, the UE initiates a first session transfer request in the IP-CAN, and contains the transfer identifier of the session A-B.

In Steps 2-6, the DTF identifies that the session leg of the session A-B is to be transferred according to the transfer identifier, so as to initiate the negotiation with the user B, and after the access leg of the IP-CAN is established, the Bye message is sent to release the session leg of the CS domain.

In Steps 7-8, here, after receiving the Bye message, the ICCF releases the port P-B from the user B to the MRS in the original session A-B in the CS domain, and notifies the UE-A through the ICCC channel that the session A-B is released.

Here, the media of the session A-B establishes the end-to-end connection through the IP-CAN bearer and is in the activated state, and the media of the session A-C is connected through the IP-CAN and the MRS, and is in the hold state.

In Step 9, the UE initiates a second transfer request in the IP-CAN, contains the transfer identifier of the session A-C, and indicates that the session is in the HOLD state in the media provided by the UE.

In Steps 10-14, the DTF identifies that the session leg of the session A-C is to be transferred according to the transfer identifier, so as to initiate the media negotiation with the user C, and after the access leg of the IP-CAN is established, the Bye message is sent to release the session leg of the CS domain.

In Steps 15-19, after receiving the Bye message, the ICCF releases the port P-C from the user C to the MRS in the original session A-C in the CS domain, after judges that the CS domain does not have the session, the ICCF releases the port P-M connected to the MGW on the MRS, and sends the Bye message to the MGCF. After receiving the Bye message, the MGCF initiates the deleting of the media, converts the message to the ISUP message, and initiates the session deleting to the circuit domain of the UE-A.

Here, the media of the session A-B establishes the end-to-end connection through the IP-CAN and is in the activated state, the media of the session A-C establishes the end-to-end connection through the IP-CAN and is in the non-activated state, and the bearer resources of the CS domain are released.

To sum up, in embodiments of the present invention, the domain transfer AS receives the domain transfer request message containing the transfer identifier. The domain transfer AS acquires the transfer identifier from the domain transfer request message, and performs the domain transfer on the corresponding session according to the transfer identifier. Therefore, the location and domain transfer on the session to be transferred performed by the domain transfer AS are realized.

Further, in embodiments of the present invention, under various situations, the detailed flows of the distribution of the transfer identifier, the delivery of the transfer identifier, the recording of the association relation between the session and the transfer identifier performed by the user terminal, the location of the session performed by the DTF when the transferring is initiated, and the domain transfer performed on the located session by the DTF are described.

Further, the solution of differentiating a plurality of sessions between the ICCF and the UE when the UE has the plurality of sessions is further provided.

It is further provided how to apply the media resource port when the plurality of sessions sharing one CS domain bearer is transferred to the CS domain, so as to solve the problem of how to connect the MGW port with a plurality of remote media ports.

During the implementation of the present invention, the first identifier is adapted to identify the session on the user terminal, the second identifier is adapted to identify the session on the domain transfer AS, and a mapping relation between the first identifier and the second identifier is established. When the user terminal initiates the session transfer, the first identifier is contained in the session transfer request, the domain transfer AS determines the second identifier corresponding to the first identifier according to the mapping relation. The domain transfer AS performs the transfer after determining the session according to the second identifier. The session mainly refers to the IMS session and/or the CS session.

The session identifier used during the implementation performs the identifier by using a sequence amount of establishing the session of one user, but the sequence amount is not overall unique but is only of the user, so during using, the user identifier is added for performing the identifier. Further, when the user has a plurality of terminals, it is necessary to add a terminal identifier, so as to finally determine one unique session. The sequence amount of establishing the session of one user is defined according to the sequence of generating the session on one terminal in the session of the IMS domain, and the sequence amount of the session in the CS domain may be indicated by 0 or the CS session is directly indicated by the user identifier.

That is to say, during the implementation, the sequence amount in the session identifier is firstly required, the user identifier is required next, and the terminal identifier is finally required. During the implementation, the positive material identifier (PMI) is used as the terminal identifier, so as to ensure that the session may perform the unique identifier in each layer and each application condition. Based on the same objective, distinctly, during the implementation, one overall terminal identifier may be used, for example, a session is identified by using an instance-id and session establishing sequence amount, or the session is identified by using an international mobile equipment identity (IMEI), electronic serial (ESN), or other overall unique identifiers.

During the implementation, the sequence amount may be respectively generated by the two ends without the interaction (for example, the establishing of the session in the CS domain), or may be generated by one end, and sent to the remote user (for example, the establishing of the session in the IMS domain).

The user identifier may be the IMPU in the IMS domain, may be a mobile station international integrated services digital network (MSISDN) or a mobile directory (MDN) (in the code division multiple access (CDMA) network) in the CS domain for performing the identifier.

When the detailed implementation of the present invention is described, firstly, the flow of the implementation is described, the implementation of each step is described, and finally the detailed embodiments are further described.

Referring to Figure 30, a schematic view of an implementation flow of a method for providing a multi-session transfer in a multi-access manner is shown, and the method includes the steps as follows.

In Step 401, before the UE transfers the session, the session on the user terminal is identified by the first identifier, the session on the domain transfer AS is identified by the second identifier, and the mapping relation between the first identifier and the second identifier is established.

In the step, the UE and the DTF determine the session identifier for each established session, and establish the mapping relation. Here the mapping relation is easily understood and realized. In the implementation, the easiest mapping relation, in which the first identifier is the same as the second identifier, is used for description. That is to say, the identifiers of the each IMS or CS session on the UE and the identifiers of the sessions on the UE anchored on the DTF are identical and unique, and the unique object to enable the UE and the DTF to identify different sessions. In the implementation, the UE and the DTF only need to send the identifier determined by itself to the other party, the two parties may establish the mapping relation. Further, in a preferred implementation, the identifier determined by the other party may be directly used as the identifier of itself, so as to simply establish the mapping relation. Distinctly, when the mapping relation is established, the manner of sending to the other party may not be used, and it is also available to respectively generate the identifier according to the same rule, for example, when the session is established in the CS domain, the identifier is generated in this manner. Therefore, the description is given as follows with the implementing manner of establishing the mapping relation by sending the identifier to the other party.

### 1. When the session is the IMS session, the situations are as follows.

1). When the calling party is from IMS, the IMS session identifier or the sequence amount of establishing the session is generated on the UE or the DTF, and during the process of establishing the session, the generated IMS session identifier or the sequence amount of establishing the session may be contained by using the original header field or the parameter, by adding the header field or the parameter, or by extending the header field or the parameter in the SIP protocol.
   The IMS session is identified by using the overall terminal identifier (for example, instance-id), the sequence amount of establishing the session or the user identifier, and the sequence amount of establishing the session; or the IMS session is identified by the terminal identifier (for example, the local PMI), the user identifier, and the sequence amount of establishing the session. When several UEs share the IMPU, an identifier is adapted to identify one user terminal, and the PMI is used as one method for identifying the user terminal. Distinctly, when the called party is from the IMS, the PMI may also be adapted to identify the next user terminal of the several UEs sharing the IMPU.
   When the IMS session identifier or the sequence amount of establishing the session is generated on the UE, during the process of establishing the session, the sequence amount of establishing the session is contained in the User-Agent header field. Particularly, when the calling party is from the IMS, the sequence amount of establishing the session is contained in the User-Agent header field, when the session establishment request reaches the DTF, the DTF saves the sequence amount of establishing the IMS session. During or after the process of establishing the session, according to the information contained when the session is established, the IMS session identifier is combined according to the definition of the IMS session identifier on the DTF.
   Alternatively, after the session is established, the DTF is notified of the IMS session identifier or the sequence amount of establishing the session by containing the IMS session identifier by using the SIP: INFO method. The objective of the INFO method is to allow delivering the control information relevant to the session, and the control information is generated in the session. The objective of the INFO message is to contain an application layer message along the SIP signaling path. The INFO method is not adapted to change the state of the SIP call, or the initialized state parameter of the session SIP. The INFO method is only adapted to send the optional information of the application layer relevant to the session. The information in the session may perform the communication at the INFO information header or serving as a part of the message body.
   When the IMS session identifier or the sequence amount of establishing the session is generated on the DTF, during the implementation, the sequence amount of establishing the session may be contained in the Server header field. Particularly, the calling party is from the IMS, when the session establishment request reaches the DTF, the DTF generates the sequence amount of establishing the IMS session according to the session establishment request, and the sequence amount of establishing the session is contained in the Server header field in a response message during the process of establishing the session. During the process of establishing the session, when the response message reaches the UE, the UE saves the sequence amount of establishing the IMS session. During of after the process of establishing the session, according to the information contained when the session is established, the IMS session identifier is combined according to the definition of the IMS session identifier on the DTF.
   Alternatively, after the session is established, the UE is notified of the IMS session identifier or the sequence amount of establishing the session by using the SIP: INFO method.
2). When the called party is from the IMS, IMS session identifier or the sequence amount of establishing the session is generated on the UE or the DTF, during the process of establishing the session, the generated IMS session identifier or the sequence amount of establishing the session may be contained by using the original header field or the parameter, by adding the header field or the parameter, or by extending the header field or the parameter in the SIP protocol.

The IMS session is identified by using the PMI+IMPU (SIP URI or the TEL URI) and sequence amount of establishing the session, or IMPU and sequence amount of establishing the session.

When the session identifier or the sequence amount of establishing the session is generated on the UE, during the process of establishing the session, the sequence amount of establishing the session is contained in the Server header field, when the signaling reaches the DTF during the process of establishing the session, the DTF saves the sequence amount of establishing the IMS session. During or after the process of establishing the session, according to the information contained when the session is established, the IMS session identifier is combined according to the definition of the IMS session identifier on the DTF.

Alternatively, after the session is established, the DTF is notified of the IMS session identifier or the sequence amount of establishing the session by using the SIP: INFO method.

When the IMS session identifier or the sequence amount of establishing the session is generated on the DTF, during the implementation, when the signaling reaches the DTF, according to the information requested to be contained when the session is established, the IMS session identifier or the sequence amount of establishing the session is generated according to the definition rule of the IMS session identifier on the DTF. During the process of establishing the session, the sequence amount of establishing the session is contained by using the User-Agent header field, and during the process of establishing the session, when the signaling reaches the UE, the UE saves the sequence amount of establishing the IMS session. During or after the process of establishing the session, according to the information contained when the session is established, the IMS session identifier is combined according to the definition rule of the IMS session identifier on the DTF. Alternatively, after the session is established, the UE is notified of the IMS session identifier or the sequence amount of establishing the session by using the SIP: INFO method.

### 2. When the session is the CS session, the situations as follow exist.

1). The calling party is from the CS.

Only one session is activate in the CS domain, the sequence amount of establishing the session in the CS domain may not be assigned, or a special sequence amount, for example, 0, may be assigned to indicate the sequence amount of establishing the session. According to the normal VCC flow, the CS session is identified according to the MSISDN or the MSISDN+0 on the UE and the DTF. During the implementation in the CDMA application, the session may be identified by using the MDN or the MDN+0.

2). The called party is from the CS.

Only one session is activate in the CS domain, the sequence amount of establishing the session in the CS domain may not be assigned, or a special sequence amount, for example, 0, may be assigned to indicate the sequence amount of establishing the session. According to the normal VCC flow, the CS session is identified according to the MSISDN or the MSISDN+0 on the UE and the DTF.

In Step 402, when the session is transferred, the first identifier is contained in the session transfer request, the domain transfer AS determines the second identifier corresponding to the first identifier according to the mapping relation. The domain transfer AS performs the transfer after determining the session according to the second identifier.
1. The session transfer request is initiated from the IMS domain to the IMS domain.
   In the IMS session transfer request, the original IMS session identifier is contained by using the original header field or the parameter, by adding the header field or the parameter, or by extending the header field or the parameter in the SIP protocol in the INVITE method. Particularly, during the implementation, the original IMS session identifier may be contained by using the Replaces header field, the From header field, or the User-Agent header field.
   The INVITE method is a SIP core function, when an entity intends to initiate the communication with another entity, and it may be finished by sending an INVITE. Each INVITE includes an SIP address (or the uniform resource locator (URL)), so as to serve as the destination of sending the INVITE. The URL is the main routing path of the message. During the process of creating the communication session, the SIP address uniquely identifies the user.
2. The session transfer request is initiated from the CS domain to the IMS domain.
   In the IMS session transfer request, the original CS session identifier is contained by using the original header field or the parameter, by adding the header field or the parameter, or by extending the header field or the parameter in the SIP protocol in the INVITE method. Particularly, during the implementation, the original IMS session identifier may be contained by using the Replaces header field, the From header field, or the User-Agent header field.
3. The session transfer request is initiated from the IMS domain to the CS domain.
   The original IMS session identifier is contained in the UUI or the VDN. During the implementation, when a visited mobile switching centre (VMSC) intelligently triggers the request to the FE-C on the CS transfer signaling path, the information contained in the intelligent triggering signaling includes [calling], [VDN], and [UUI]. Here, the original IMS session identifier information may be contained in the UUI or the VDN. The FE-C saves the session transfer information by interacting with the CSAF. When the call is routed to the VCC user home IMS network through an IP multimedia routing (IMRN), the session transfer information may be acquired on the CSAF according to the IMRN, and the original IMS session identifier is generated, so that the original IMS session identifier is contained by using the original header field or the parameter, by adding the header field or the parameter, or by extending the header field or the parameter in the SIP protocol in the INVITE request. Another method in parallel with the intelligent triggering manner is that the original IMS session identifier information in the IAM message is directly converted to the corresponding parameter in the INVITE request through the MGCF, and is contained to finally reach the DTF. The containing manner may be the same as the implementing manner of transferring to the IMS in the above embodiment.

The first identifier is contained by using the Replaces header field, in the From header field, or in the User-Agent header field.

The implementation steps are described as follows.
1). The original IMS session identifier or the sequence amount of establishing the session part in the original IMS session identifier is contained in the information element UUI in the intelligent triggering signaling InitialDP, or the sequence amount of establishing the session part in the original IMS session identifier is contained in the VDN.
2). The routing is redirected to IMS and reaches the CSAF, the CSAF acquires the sequence amount of establishing the IMS session by parsing from the UUI or the VDN, so as to generate the original IMS session identifier.
3). The original IMS session identifier is contained by using the added header field in the newly generated INVITE request, extending the existing header field, or adding the header field. For example, the first identifier is contained by using the Replaces header field, in the From header field, or in the User-Agent header field.
4). The request is triggered to the DTF through the S-CSCF, the second session identifier is obtained by associating with the first session identifier, the original IMS session access leg is determined, and the original IMS session access leg is transferred to the new CS session access leg.

The implementing manner of the present invention is further described with the detailed embodiments as follows.

### Embodiment 27

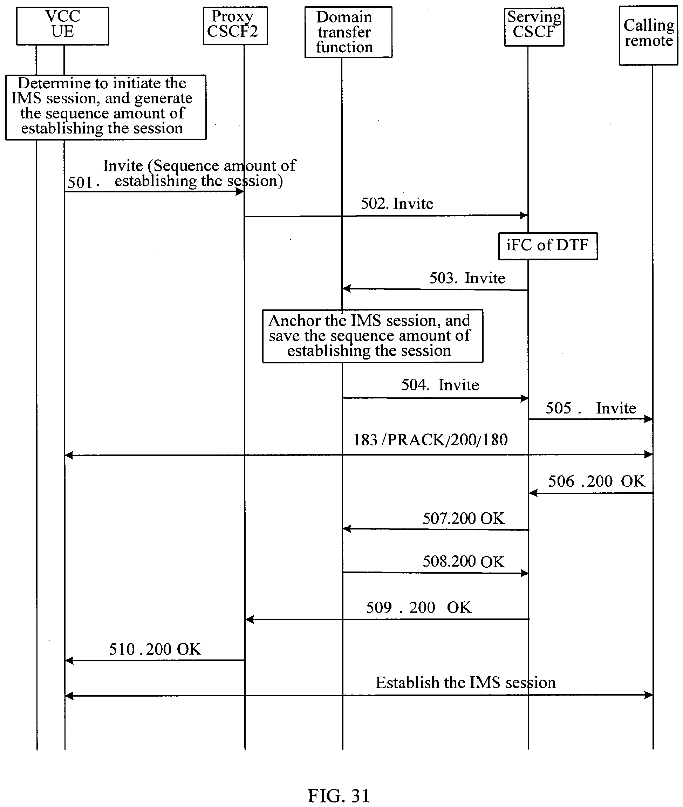

Referring to Figure 31, a schematic flow chart of Embodiment 27 is shown. The calling party is from the IMS, the UE generates the sequence amount of establishing the session, and the session identifiers on the DTF and the UE are the same. The implementation includes the following steps.

In Steps 501-503, the UE initiates an IMS session according to the indication of the user. The sequence amount of establishing the IMS session is generated on the UE, and the sequence amount of establishing the IMS session is contained in the header field User-Agent of the session request INVITE. In order to identify the particular UE, the device identifier of the UE, such as the PMI, is contained in the session request. When the IMS calling flow reaches the DTF according to the VCC structure, the DTF determines that the session is the IMS domain call, and saves the sequence amount of establishing the IMS session contained in the session request.

In Steps 504-505, the DTF initiates the call to the remote user as a back-to-back user agent (B2BUA).

In Steps 506-510, the session is successfully established according to the flow of establishing the IMS call session. During or after the process of establishing the session, according to the sequence amount of establishing the session, the UE and the DTF generate the IMS session identifier according to the composing manner of the IMS session identifier.

During the implementation, the IMS session identifier is [PMI+]IMPU (SIP URI or TEL URI) and the sequence amount of establishing the session, and is generated by the UE, in which the [PMI+] indicates that the PMI is optional. For ease of description, in all the embodiments, the content in the identifier "[ ]" adopted in the description of the session identifier indicates that it is optional.

Definitely, if the session identifier is not delivered in the session establishing interaction message, after the session is established, the UE notifies the DTF through the request INFO message in the session, so that the session identifiers on the UE and the DTF are the same.

### Embodiment 28

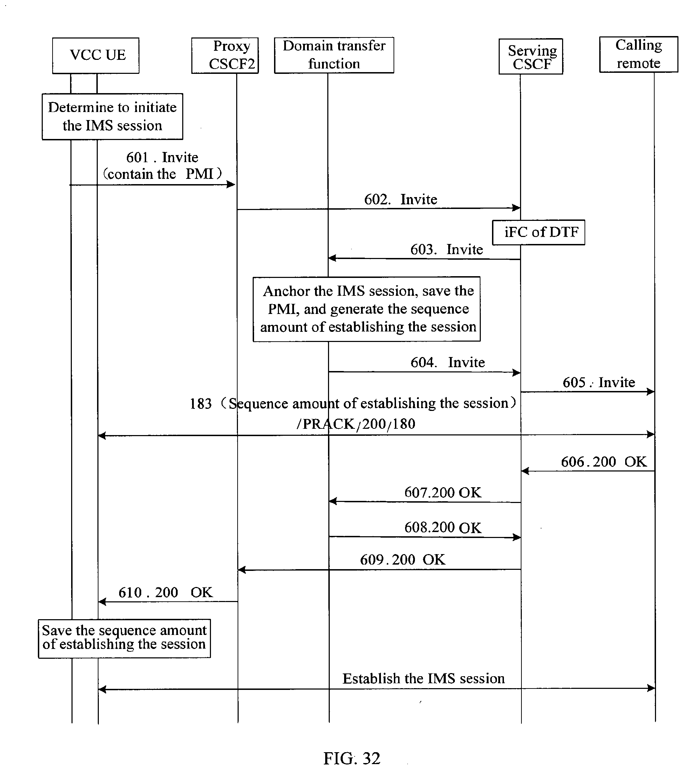

Referring to Figure 32, a schematic flow chart of Embodiment 28 is shown. The calling party is from the IMS, the sequence amount of establishing the IMS session is generated on the DTF, and the session identifiers on the DTF and the UE are the same. The implementation includes the following steps.

In Steps 601-603, the UE initiates an IMS session according to the indication of the user. In order to enable the network to identify which UE initiates the session, the device identifier of the UE, for example, the PMI, is contained in the session message. When the IMS calling flow reaches the DTF according to the VCC structure, the DTF determines that the session is the IMS domain call, generates and saves the sequence amount of establishing the IMS session.

In Steps 604-605, the DTF initiates the call to the remote user as the B2BUA.

In Steps 606-610, the session is successfully established according to the flow of establishing the IMS call session. The DTF contains the sequence amount of establishing the session to the UE by using the Server header field in the response message. During or after the process of establishing the session, according to the sequence amount of establishing the session, the UE and the DTF generate the IMS session identifier according to the composing manner of the IMS session identifier.

During the implementation, the IMS session identifier is [PMI+]IMPU (SIP URI or TEL URI) and the sequence amount of establishing the session, and is generated by the DTF.

After the session is established, the DTF notifies the UE through the request INFO message in the session, so that the session identifiers on the UE and the DTF are the same.

### Embodiment 29

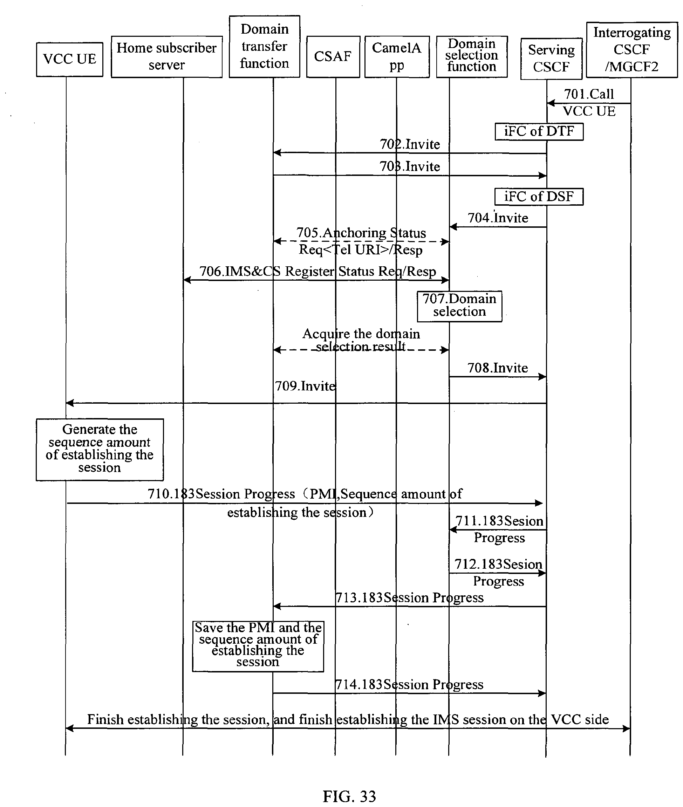

Referring to Figure 33, a schematic flow chart of Embodiment 29 is shown. the called party is from the IMS, the UE generates the sequence amount of establishing the IMS session, and the session identifiers on the UE and the DTF are the same. The implementation includes the following steps.

In Steps 701-702, the user is the called party, the Invite request reaches the home S-CSCF of the UE, and is triggered to the DTF according to an initial filtering rule, and the session is anchored on the DTF.

In the IMS, the S-CSCF needs to detect each initial filtering rule in sequence in the IMS, but under certain situations, it is not necessary or impossible to detect the initial filtering rules.

In Steps 703-707, the DTF triggers the INVITE request to the S-CSCF, and the INVITE request is triggered to the DSF according to the filtering rule, the DSF performs a domain selection decision, and continues to perform the session connection in the IMS domain, then the interaction domain of the DSF and the DTF is selected as the IMS domain connection result.

In Steps 708-714, the UE receives the session request, generates and saves the sequence amount of establishing the IMS session. During the subsequent process of establishing the session, the UE delivers the sequence amount of establishing the IMS session to the DTF along the signaling path by using the Server header field. In order to enable the network to identify which UE generates the session identifier, the UE delivers the device identifier, for example, the PMI, to the DTF. During or after the process of establishing the session, according to the sequence amount of establishing the session, the UE and the DTF generate the IMS session identifier according to the composing manner of the IMS session identifier.

During the implementation, the IMS session identifier is [PMI+]IMPU (SIP URI or TEL URI) and the sequence amount of establishing the session, and is generated by the UE.

After the session is established, the UE notifies the DTF through the INFO message, so that the session identifiers on the UE and the DTF are the same.

### Embodiment 30

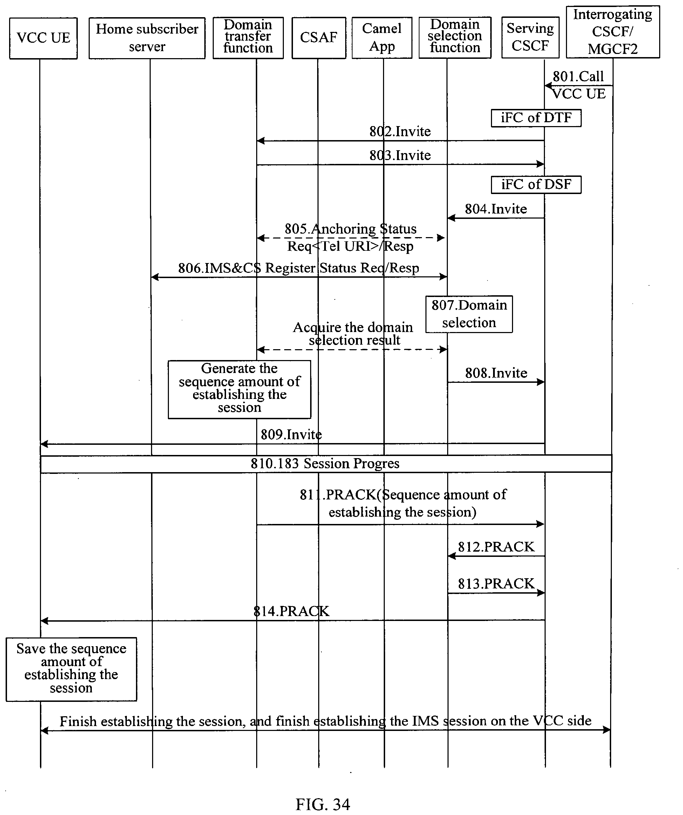

Referring to Figure 34, a schematic flow chart of Embodiment 30 is shown. The called party is from the IMS, the sequence amount of establishing the IMS session is generated on the DTF, and the session identifiers on the DTF and the UE are the same. The implementation includes the following steps.

In Steps 801-802, the user is the called party, the Invite request reaches the home S-CSCF of the UE, and is triggered to the DTF according to the initial filtering rule, and the session is anchored on the DTF.

In Steps 803-807, the DTF triggers the INVITE request to the S-CSCF, and the INVITE request is triggered to the DSF according to the filtering rule, the DSF performs the domain selection decision, and continues to perform the session connection in the IMS domain, then the interaction domain of the DSF and the DTF is selected as the IMS domain connection result.

In Steps 808-814, the DTF generates and saves the sequence amount of establishing the IMS session, according to the acquired connection session result in the IMS domain. During the subsequent process of establishing the session, the DTF delivers the sequence amount of establishing the IMS session to the UE along the signaling path by using the User-Agent header field. In order to enable the network to identify which terminal the session stops on, the UE contains the device identifier thereof, for example, the PMI, in the session response message. During or after the process of establishing the session, according to the sequence amount of establishing the session, the UE and the DTF generate the IMS session identifier according to the composing manner of the IMS session identifier.

During the implementation, the IMS session identifier is [PMI+]IMPU (SIP URI or TEL URI) and the sequence amount of establishing the session, and is generated by the DTF.

After the session is established, the DTF notifies the UE through the INFO message, so that the session identifiers on the UE and the DTF are the same.

### Embodiment 31

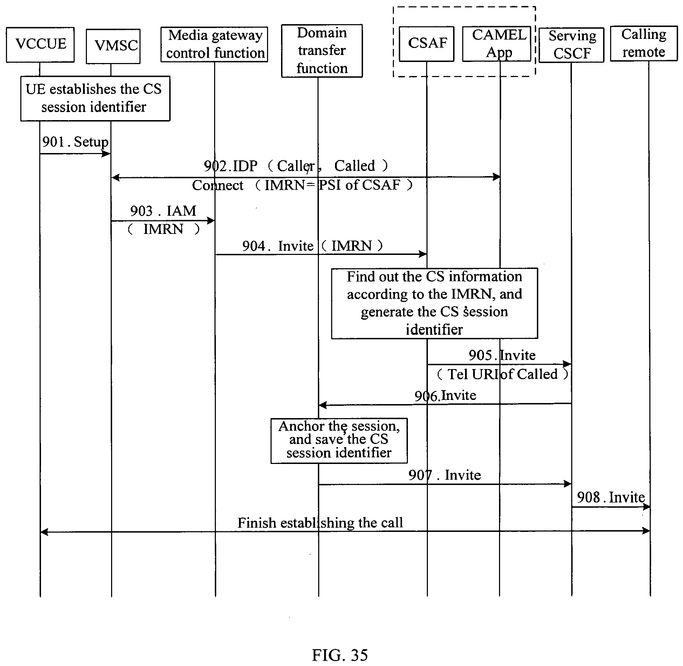

Referring to Figure 35, a schematic flow chart of Embodiment 31 is shown. The calling party is from the CS, and the session identifiers on the DTF and the UE are the same. The implementation includes the following steps.

In Steps 901-902, the UE initiates the call in the CS domain and establishes the session identifier (MSISDN[+0]) of the CS call, after the call reaches the VMSC, it is intelligently triggered to the CAMEL customized applications for mobile network enhanced logic (CAMEL App), the intelligent triggering message IDP contains the calling number and the called number. The CAMEL App interacts with the CSAF, and acquires a routing redirect IMRN, and the IMRN is delivered to the VMSC as the information contained in the InitialDP response.

In Steps 903-904, the MSC sends the IAM to the MGCF by using the IMRN as the called number, and the IAM reaches the CSAF after passing through the MGCF and the I-CSCF. The CS information of the session is acquired on the CSAF according to the IMRN.

In Steps 905-908, the CSAF generates the Invite request according to the CS information, in which the Tel URI of the called party serves as the called number. The CSAF may contain the CS session identifier or the sequence amount of establishing the session (0) in the Invite request according to the method for establishing the IMS session. The session is triggered to the DTF through the S-CSCF, and the CS session is anchored on the DTF, the DTF determines that the calling party is from the CS, and saves the CS (MSISDN [+0]) session identifier. Then, the session request is set to the calling remote user along the signaling path.

During the distribution of the CAMEL-App, during the calling process, the CSAF acquires the CS session information by interacting with the CAMEL App. When the session establishment request reaches the CSAF through the IMRN, the CSAF generates the Invite request of continuing to connect the session according to the acquired CS session information.

### Embodiment 32

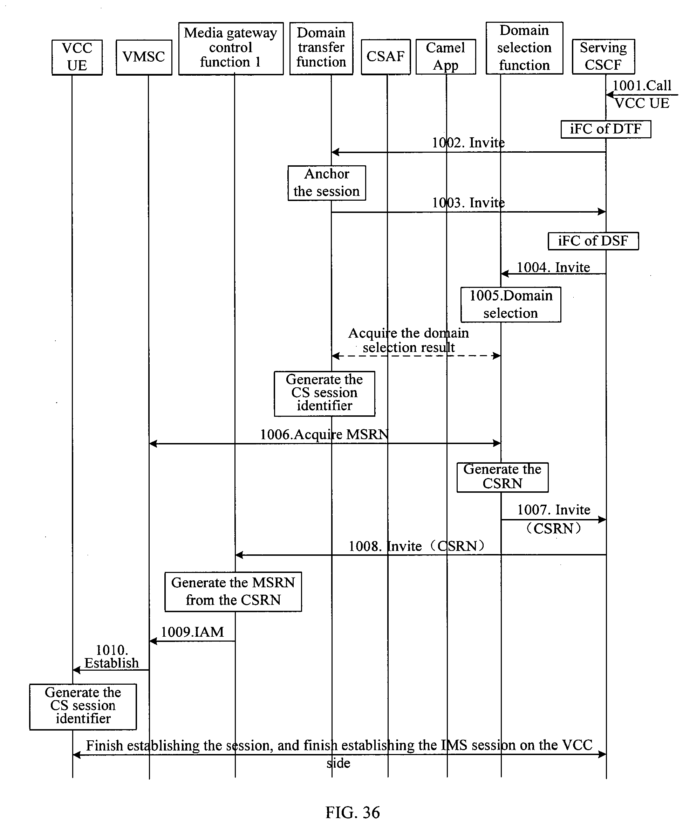

Referring to Figure 36, a schematic flow chart of Embodiment 32 is shown. The UE is the called party, and in a CS session process, the session identifiers on the DTF and the UE are the same. The implementation includes the following steps.

In Steps 1001-1002, the user is the called party, the INVITE request reaches the home S-CSCF of the UE, and is triggered to the DTF according to the initial filtering rule, and the session is anchored on the DTF.

In Steps 1003-1007, the DTF triggers the Invite request to the S-CSCF, and the INVITE request is triggered to the DSF according to the filtering rule, the DSF performs the domain selection decision, and continues to perform the session connection in the CS domain, then the interaction domain of the DSF and the DTF is selected as the CS domain connection result. The DTF generates the session identifier of the CS domain (MSISDN[+0]).

In Steps 1008-1010, according to the process of establishing the session in the CS domain, the UE receives the session request, and determines the CS (MSISDN[+0]) session identifier. Then, the session is established according to the CS domain session connection process.

### Embodiment 33

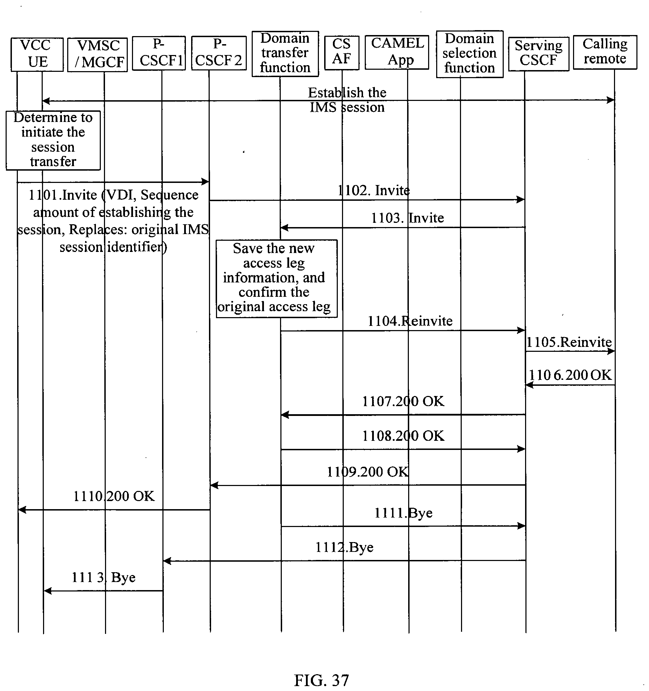

Referring to Figure 37, a schematic flow chart of Embodiment 33 is shown, the UE transfers a current IMS session to the IMS session under another access network, and the original IMS access leg session identifier is contained by using the Replaces header field. The implementation includes the following steps.

In Steps 1101-1103, the IMS session is identified by using [PMI+]IMPU (SIP URI or TEL URI) and the sequence amount of establishing the session. The UE determines to transfer the current IMS session to the IMS session under another access network, the original IMS access leg session identifier is contained by using the Replaces header field, and is delivered to the DTF along the signaling path.

In Steps 1104-1113, the DTF receives the session transfer request. It is detected that the transfer is performed on the session, the original IMS access leg session identifier is found from the transfer request, then, the original IMS access leg is determined from the anchored session, the original IMS access leg is transferred to the new IMS access leg, the calling remote user is updated, and the original IMS access leg is released. The new IMS access leg session identifier is generated according to the IMS session establishing rule.

During the implementation, the sequence amount of establishing the session in the original IMS access leg session identifier may be contained by using the Replaces header field, and the IMPU and the PMI are respectively filled according to the original IMS session mechanism. According to the information contained in the session transfer request, the original IMS access leg session identifier is generated according to the rule of determining the IMS session identifier on the DTF. Then, the original IMS access leg is determined in the anchored session, the IMS access leg session identifier is saved, the original IMS access leg is transferred to the new IMS access leg, the calling remote user is updated, and the original IMS access leg is released. The original IMS access leg session identifier or the sequence amount of establishing the session in the session identifier may be contained by using the From header field in the transfer request, and when the transfer request reaches the DTF, the session transfer is performed according to the original IMS access leg session identifier.

### Embodiment 34

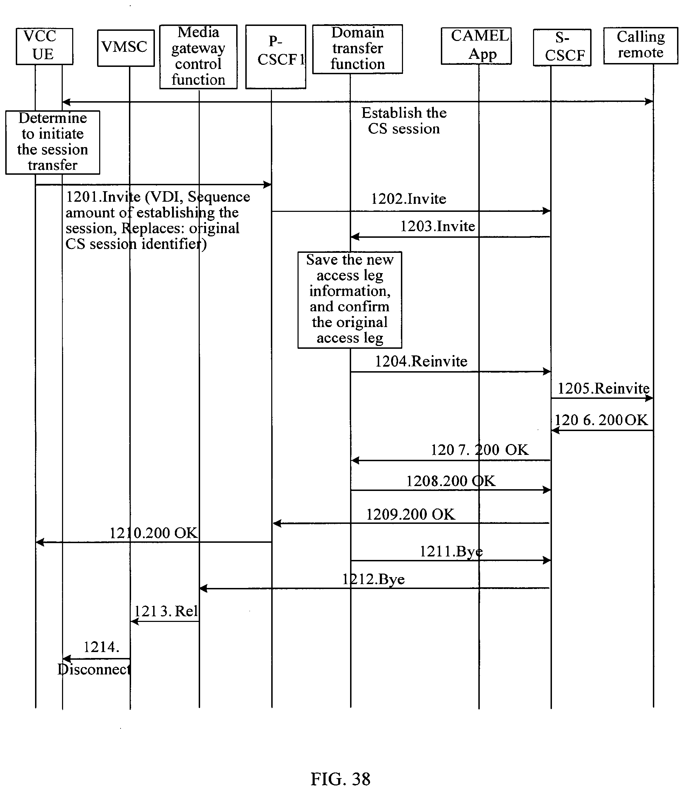

Referring to Figure 38, a schematic flow chart of Embodiment 34 is shown, the UE transfers a current IMS session to the IMS session under another access network, and the original IMS access leg session identifier is contained by using the Replaces header field. The implementation includes the following steps.

In Steps 1201-1203, the CS session is established, and the same CS (MSISDN+[0]) session identifier capable of determining the session is saved in the UE and the DTF. The UE determines to transfer the current CS session to the IMS session. The original session is indicated to be the CS session by containing the original CS session identifier by using the Replaces header field in the transfer request or by not containing the Replaces header field in the transfer request. The transfer request is delivered to the DTF along the signaling path. The DTF determines the original CS access leg according to the original CS session identifier in the transfer request or identifies the CS session to find the original CS access leg as the Replaces header field is not contained in the transfer request. Then, the original access leg is transferred to the new access leg.

In Steps 1204-1214, the calling remote user is updated, and the original IMS access leg is released. The new IMS access leg session identifier is generated according to the rule of establishing the IMS session.

During the implementation, the sequence amount of establishing the session in the original IMS access leg session identifier may be contained by using the Replaces header field. According to the information contained in the session transfer request, the original IMS access leg session identifier is generated according to the rule of determining the CS session identifier on the DTF. Then, the original IMS access leg is determined in the anchored session, the IMS access leg session identifier is saved, the original IMS access leg is transferred to the new IMS access leg, the calling remote user is updated, and the original IMS access leg is released. The original IMS access leg session identifier or the sequence amount (0) of establishing the session in the session identifier may be contained by using the From header field in the transfer request, and when the transfer request reaches the DTF, the session transfer is performed according to the original CS access leg session identifier.

### Embodiment 35

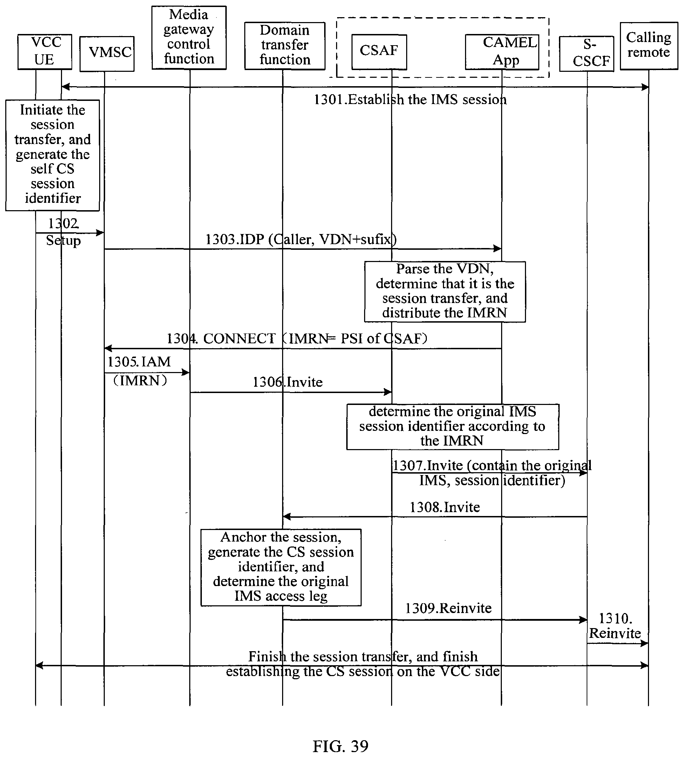

Referring to Figure 39, a schematic flow chart of Embodiment 35 is shown, and the UE transfers a current IMS to a CS session, in which the implementation of initiating the transfer includes the followings steps.

In Step 1301, the original IMS session is identified by using [PMI+]IMPU (SIP URI or TEL URI) and the sequence amount of establishing the session, the IMS session is successfully established, and the same unique session identifier for the IMS session exist on the UE and the DTF.

In Steps 1302-1304, the UE determines to transfer the current IMS session to the CS session, generates the transfer request, and initiates the transfer, in which the session sequence amount in the original IMS session identifier is contained in the transfer request. In this embodiment, the session sequence amount is contained by adding a prefix/suffix to the called VDN, and may be contained in the UUI information. The UE may generate and record the CS session identifier (MSISDN+[0]). After the session reaches the VMSC, the session is triggered to the CAMEL App through the IDP message, the VDN or the UUI parameter with the prefix/suffix is contained in the IDP (depending on the manner of containing the session sequence amount when the user terminal initiates the transferring). After receiving the IDP message, the CAMEL App parses the called number, acquires the VDN and the sequence amount of establishing the session in the original IMS access leg session identifier, judges that it is the session transfer request, keeps the information contained in the transfer request together with the CSAF, distributes the IMRN, and delivers the IMRN to the VMSC by containing the IMRN in the IDP response.

In Steps 1305-1308, according to the IMRN, the VMSC redirects the routing to the IMS domain, when the routing reaches the CSAF, the CSAF parses the sequence amount of establishing the IMS session from the VDN, or according to the acquired and saved sequence amount in Step 1303 or the sequence amount acquired by interrogating from the CSAF, the original IMS access leg session identifier is generated and filled in the Replaces header field in the newly generated INVITE request for being contained. The CSAF contains the CS session identifier or the sequence amount of establishing the session (0) in the Invite request according to the method for establishing the CS session. The request is triggered to the DTF through the S-CSCF, the DTF determines that it is the CS session transfer request, the original IMS access leg is determined according to the original IMS access leg session identifier, and the original IMS access leg is transferred to the new CS access leg. The DTF may further generate the CS session identifier (MSISDN+[0]), providing for the next transferring.

In Step 1309-1310, the ReInvite request is sent to update the calling remote user, then the original IMS access leg is released, and the session transfer is finished.

In the INVITE transfer request generated by the CSAF, the sequence amount of establishing the session in the original IMS access leg session identifier may be contained by using the Replaces header field. The DTF generates the CS session identifier (MSISDN+[0]) according to the CS session transfer request, and generates the original IMS access leg session identifier on the DTF. Then, the original IMS access leg is determined from the anchored session, the new CS access leg session identifier is saved, the original IMS access leg is transferred to the new CS access leg, the remote user is updated, and the original IMS access leg is released. The original IMS access leg session identifier or the sequence amount of establishing the session in the session identifier may be contained by using the From header field in the INVITE transfer request generated by the CSAF. When the transfer request reaches the DTF, the session transfer is performed according to the original IMS access leg session identifier.

### Embodiment 36

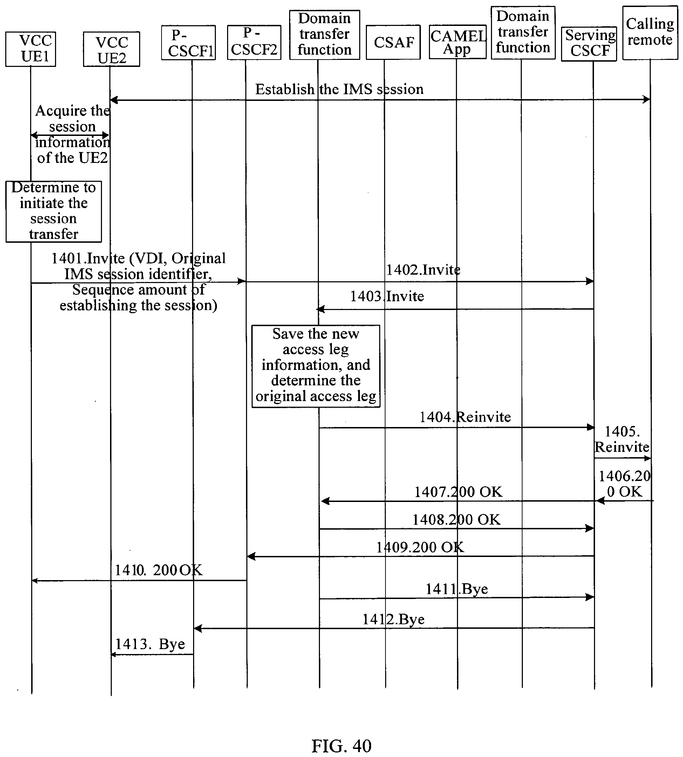

Referring to Figure 40, a schematic flow chart of Embodiment 36 is shown, in the cross-UE session transfer, the UE1 transfers a current IMS session on the UE2 to the IMS session on the UE1, and the implementation of initiating the transfer includes the following steps.

In Steps 1401-1403, the IMS session is established on the UE2, and the UE1 interacts with the UE2 through wireless interfaces, the infrared technique, or other manners, thereby acquiring the session information on the UE2. The IMS session is identified by using [PMI+]IMPU (SIP URI or TEL URI) and the sequence amount of establishing the session. The UE1 determines to transfer the IMS session on the UE2 to the IMS session on the UE1, and the original IMS access leg session identifier is contained by using the Replaces header field, and is delivered to the DTF along the signaling path.

In Steps 1404-1413, the DTF receives the session transfer request. It is detected that the transferring is performed on the session, the original IMS access leg session identifier is found from the transfer request, then, the original IMS access leg is determined from the anchored session, the original IMS access leg is transferred to the new IMS access leg, the remote user is updated, and the original IMS access leg is released. The new IMS access leg session identifier is generated according to the IMS session establishing rule.

The sequence amount of establishing the session in the original IMS access leg session identifier may be contained by using the Replaces header field. According to the information contained in the session transfer request, the original IMS access leg session identifier is generated according to the rule of determining the IMS session identifier on the DTF. Then, the original IMS access leg is determined in the anchored session, the IMS access leg session identifier is saved, the original IMS access leg is transferred to the new IMS access leg the calling remote user is updated, and the original IMS access leg is released. The original IMS access leg session identifier or the sequence amount of establishing the session in the session identifier may be contained by using the From header field in the transfer request, and when the transfer request reaches the DTF, the session transfer is performed according to the original IMS access leg session identifier.

Distinctly, the transferring may be re-implemented when the CS session is transferred to the IMS session or the IMS session is transferred to the CS session, and the transferring manner may be performed according to Embodiments 8, 9, and 11.

### Embodiment 37

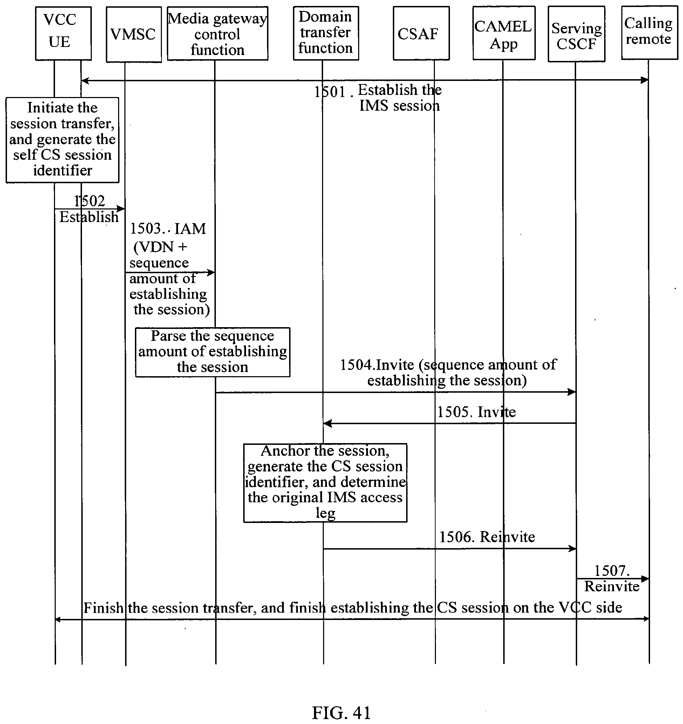

Referring to Figure 41, a schematic flow chart of Embodiment 37 is shown, when the transfer request does not pass through the CAMEL App, the current IMS session is transferred to the CS session, and the implementation of initiating the transfer includes the following steps.

In Step 1501, the original IMS session is identified by using [PMI+]IMPU (SIP URI or TEL URI) and the sequence amount of establishing the session, the IMS session is successfully established, and the same unique session identifier for the IMS session exist on the UE and the DTF.

In Steps 1502-1505, the UE determines to transfer the current IMS session to the CS session, generates the transfer request, and contains the sequence amount of establishing the original IMS session by adding a suffix to the VDN in the transfer request. The UE may also generate the CS session identifier (MSISDN+[0]). During the transferring process, the VMSC routes the transfer request to the MGCF according to the VDN, the MGCF generates the INVITE request to the DTF according to the received VDN with the sequence amount of the session and sends the INVITE request to the DTF, in the INVITE request, the original IMS session identifier or the sequence amount of the session in the session identifier is filled into the Replaces header field or the From header field.

In Steps 1506-1507, the DTF determines that it is the CS session transfer request, the original IMS access leg is determined according to the original IMS access leg session identifier, and the original IMS access leg is transferred to the new CS access leg. The ReInvite request is sent to update the calling remote user, then the original IMS access leg is released, and the session transfer is finished. The DTF further generates the CS session identifier (MSISDN+[0]), providing for the next transferring.

The sequence amount of establishing the session in the original IMS access leg session identifier may be contained by using the information element UUI in the IAM message sent to the MGCF from the VMSC.

The present invention further provides a system for providing the multi-session transfer in the multi-access manner, and the implementation of the system is described below with the accompanying drawings.

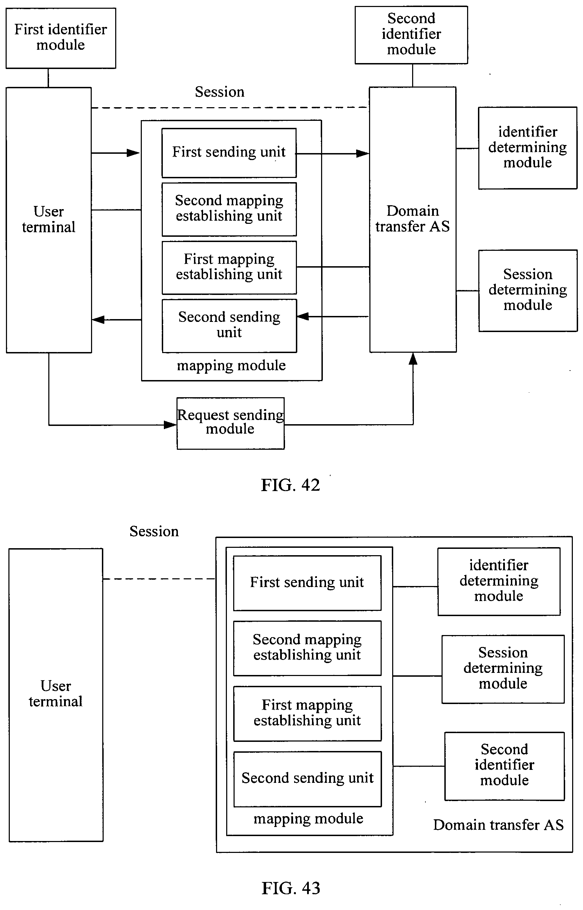

Referring to Figure 42, a schematic structural view of the system for providing the multi-session transfer in the multi-access manner is shown, in which the system includes a user terminal, a domain transfer AS, adapted to transfer the session. The system includes a first identifier module, a second identifier module, a mapping module, a request sending module, an identifier determining module, and a session determining module.

The first identifier module is adapted to identify the session on the user terminal by using a first identifier.

The second identifier module is adapted to identify the session on the domain transfer AS by using a second identifier.

The mapping module is adapted to establish a mapping relation between the first identifier and the second identifier;

The request sending module is adapted to contain the first identifier in the transfer request as the transfer identifier, and send the transfer request to the domain transfer AS during the transfer of the session.

The identifier determining module is adapted to determine the second identifier corresponding to the first identifier according to the mapping relation.

The session determining module is adapted to determine the session according to the second identifier;

The domain transfer AS performs the transfer on the session determined by the session determining module.

The mapping module includes a first sending unit, a second sending unit, a first mapping establishing unit, and a second mapping establishing unit.

When the session is the IMS session, during the process of establishing the session, the first sending unit sends the first identifier to the first mapping unit by containing the first identifier using the existing parameter, extending the existing parameter, or adding the parameter, or sends the first identifier to the first mapping unit by containing the first identifier through the SIP: INFO of the SIP after the session is established. The first mapping establishing unit establishes the mapping relation between the first identifier and the second identifier according to the sent first identifier.

During the process of establishing the session, the second sending unit sends the second identifier to the second mapping unit by containing the second identifier using the existing parameter, extending the existing parameter, or adding the parameter, or sends the second identifier to the second mapping unit by containing the second identifier through the SIP: INFO of the SIP after the session is established. The second mapping establishing unit establishes the mapping relation between the first identifier and the second identifier according to the sent second identifier.

The identifier contained by the first sending unit and the second sending unit by adding the existing parameter, extending the existing parameter, or adding the parameter includes the public user identifier IMPU and the sequence amount of establishing the session.

After the session is established, the first sending unit and the second sending unit send the identifier to each other after containing the identifier in the SIP: INFO in the SIP protocol.

When the session is the CS session, the first sending unit uses the CS domain user identifier or the CS domain user identifier+0 as the first identifier, and sends the first identifier to the first mapping unit. The first mapping establishing unit establishes the mapping relation between the first identifier and the second identifier according to the sent first identifier.

Alternatively, the second sending unit uses the CS domain user identifier or the CS domain user identifier+0 as the second identifier, and sends the second identifier to the second mapping unit. The second mapping establishing unit establishes the mapping relation between the first identifier and the second identifier according to the sent second identifier.

When the request is transferred to the IMS, the request sending module is adapted to contain the first identifier by using the existing header field, extending the existing header field, or adding the header field in the session transfer request. The first identifier is contained by using the existing header field, extending the existing header field, or adding the header field in the session transfer request. During the implementation, the first identifier may be contained by using the Replaces header field, the From header field, or the User-Agent header field.

When the request is transferred to the CS, the request sending module is adapted to contain the first identifier by using the UUI, the VDN in the session transfer request, and the first identifier is filled into the existing header field, the extended header field, and the newly added header field in the INVITE message through the CS-IMS interworking entity.

The CS-IMS interworking entity may be the MGCF entity or the CSAF entity.

The present invention further provides a domain transfer AS for providing the multi-session transfer in the multi-access manner, and the implementation of the domain transfer AS is described below with the accompanying drawings.

Referring to Figure 43, a schematic structural view of the domain transfer AS for providing the multi-session transfer in the multi-access manner is shown, the domain transfer AS includes a second identifier module, adapted to identify the session on the domain transfer AS by using a second identifier; a mapping module, adapted to establish a mapping relation between the first identifier and the second identifier; an identifier determining module, adapted to determine the second identifier corresponding to the first identifier according to the mapping relation; and a session determining module, adapted to determine the session according to the second identifier; in which the domain transfer AS performs the transfer on the session determined by the session determining module.

When the session is the IMS session, the mapping module includes a first sending unit, a second sending unit, a first mapping establishing unit, and a second mapping establishing unit.

The first sending unit is adapted to send the first identifier to the first mapping unit by containing the first identifier during the process of establishing the session, or send the first identifier to the first mapping unit by containing the first identifier through the SIP after the session is established.

The first mapping establishing unit is adapted to establish the mapping relation between the first identifier and the second identifier according to the sent first identifier.

The second sending unit is adapted to send the second identifier to the second mapping unit by containing the second identifier during the process of establishing the session, or send the second identifier to the second mapping unit by containing the second identifier through the SIP after the session is established.

The second mapping establishing unit is adapted to establish the mapping relation between the first identifier and the second identifier according to the sent second identifier.

The first sending unit may send the first identifier to the first mapping unit by containing the first identifier using the existing parameter, extending the existing parameter, or adding the parameter during the process of establishing the session, or send the first identifier to the first mapping unit by containing the first identifier through the SIP: INFO of the SIP after the session is established.

The second sending unit may send the second identifier to the second mapping unit by containing the second identifier using the existing parameter, extending the existing parameter, or adding the parameter during the process of establishing the session, or send the second identifier to the second mapping unit by containing the second identifier through the SIP: INFO of the SIP after the session is established.

When the session is the CS session, the mapping module includes a first sending unit, a second sending unit, a first mapping establishing unit, and a second mapping establishing unit.

The first sending unit uses the CS domain user identifier or the CS domain user identifier+0 as the first identifier, and sends the first identifier to the first mapping unit.

The first mapping establishing unit establishes the mapping relation between the first identifier and the second identifier according to the sent first identifier.

Alternatively, the second sending unit uses the CS domain user identifier or the CS domain user identifier+0 as the second identifier, and sends the second identifier to the second mapping unit.

The second mapping establishing unit establishes the mapping relation between the first identifier and the second identifier according to the sent second identifier.

The present invention further provides a user terminal for providing the multi-session transfer in the multi-access manner, and the implementation of the user terminal is described below with the accompanying drawings as follows.

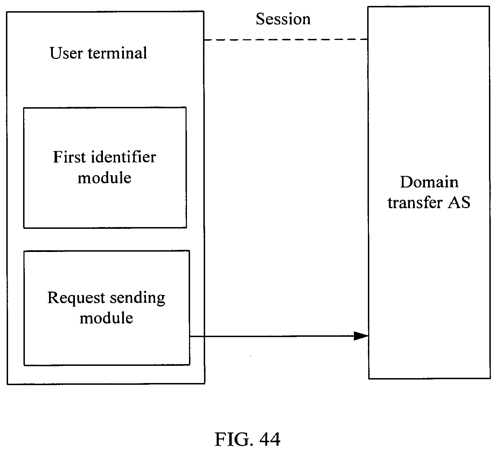

Referring to Figure 44, a schematic structural view of the user terminal for providing the multi-session transfer in the multi-access manner is shown, and the user terminal includes a first identifier module, adapted to identify the session on the user terminal by using a first identifier; and a request sending module, adapted to contain the first identifier in the transfer request, and send the transfer request to the domain transfer AS during the transfer of the session.

When the request is transferred to the IMS, the request sending module is adapted to contain the first identifier by using the existing header field, extending the existing header field, or adding the header field in the session transfer request.

The first identifier is contained by using the existing header field, extending the existing header field, or adding the header field in the session transfer request. During the implementation, the first identifier may be contained by using the Replaces header field, the From header field, or the User-Agent header field.

When the request is transferred to the CS, the request sending module is adapted to contain the first identifier by using the UUI, the VDN in the session transfer request, and the first identifier is filled into the existing header field, the extended header field, and the newly added header field in the INVITE message through the CS-IMS interworking entity.

The CS-IMS interworking entity may be the MGCF entity or the CSAF entity.

Further embodiments of the present invention are provided in the following. It should be noted that the numbering used in the following section does not necessarily need to comply with the numbering used in the previous sections.
Embodiment 1. A domain transfer method, comprising:
   receiving, by a domain transfer application server (AS), a domain transfer request message, wherein the domain transfer request message contains a transfer identifier; and
   acquiring, by the domain transfer AS, the transfer identifier from the domain transfer request message, and performing a domain transfer on a corresponding session according to the transfer identifier.
Embodiment 2. The method according to embodiment 1, wherein the transfer identifier and a voice call continuity (VCC) domain transfer number /VCC domain transfer uniform resource identifier (VDN/VDI) are independent from each other, or different VDN/VDI are used in different sessions as the transfer identifiers.
Embodiment 3. The method according to embodiment 1, wherein when the session established on an Internet protocol-connectivity access network (IP-CAN), the domain transfer AS distributes the transfer identifier associated with the session, and notifies a user terminal by containing the transfer identifier in a session initiation protocol (SIP) message.
Embodiment 4. The method according to embodiment 1, wherein when the session established on a call session (CS) domain, the domain transfer AS distributes the transfer identifier associated with the session, and notifies a user terminal.
Embodiment 5. The method according to embodiment 1, wherein when the session established on an IP-CAN, a user terminal initiating the domain transfer request distributes the transfer identifier associated with the session, and notifies the domain transfer AS by containing the transfer identifier in an SIP message.
Embodiment 6. The method according to embodiment 1, wherein when the session established on a CS domain, a user terminal initiating the domain transfer request distributes the transfer identifier associated with the session, and notifies the domain transfer AS.
Embodiment 7. The method according to embodiment 1, wherein before the domain transfer is performed, according to a default rule, a user terminal initiating the domain transfer request and the domain transfer AS respectively allocate the same transfer identifier for the session, and the user terminal and the domain transfer AS respectively record the transfer identifier allocated for the session.
Embodiment 8. The method according to embodiment 1, wherein when the domain transfer request is a domain transfer request initiated in an IP-CAN, a user terminal initiating the domain transfer request in the IP-CAN sends to the domain transfer AS an SIP session establishment message containing the transfer identifier associated with the session so as to indicate that the session is transferred to the IP-CAN.
Embodiment 9. The method according to embodiment 1, wherein the domain transfer request is a domain transfer request initiated in a CS domain, a user terminal initiating the domain transfer request in the CS domain sends to the domain transfer AS the domain transfer request message containing the transfer identifier associated with the session so as to indicate that the session is transferred to the CS domain.
Embodiment 10. The method according to embodiment 4, wherein the domain transfer AS delivers the transfer identifier to the user terminal by containing the transfer identifier in a circuit domain in one of manners as follows:
   in a manner 1.1, the domain transfer AS delivers the transfer identifier to the user terminal by containing the transfer identifier in an IP multi-media sub system CS control channel (ICCC) message;
   in manner 1.2, the user terminal and a user proxy network element deliver the transfer identifier to each other by containing the transfer identifier in the ICCC message, and the user proxy network element and the domain transfer AS deliver the transfer identifier to each other by containing the transfer identifier in an SIP message; and
   in manner 1.3, the domain transfer AS delivers the transfer identifier to the user terminal by containing the transfer identifier in an SIP signaling and converting the transfer identifier to a user-to-user information (UUI) message through a media gateway control function (MGCF).
Embodiment 11. The method according to embodiment 6 or 9, wherein the user terminal notifies the domain transfer AS by containing the transfer identifier in one of manners as follows:
   in manner 2.1, when initiating a call, the user terminal notifies the domain transfer AS through a service control point (SCP) entity in a CAMEL triggering manner by containing the transfer identifier in an UUI cell in a circuit domain message;
   in manner 2.2, when initiating the call, the user terminal notifies a user proxy network element through the SCP entity in the CAMEL triggering manner by containing the transfer identifier in the UUI cell in the circuit domain message; and the user proxy network element notifies the domain transfer AS by an SIP message;
   in manner 2.3, when initiating the call, the user terminal notifies the domain transfer AS by containing the transfer identifier in the UUI cell in the circuit domain message and converting the circuit domain message comprising the UUI to the SIP message through an MGCF;
   in manner 2.4, when initiating the call, the user terminal notifies the domain transfer AS by containing the transfer identifier in a sub address of a called of the call and converting a circuit domain signaling to the SIP message through the MGCF;
   in manner 2.5, when initiating the call, the user terminal notifies the domain transfer AS by indicating the transfer identifier of the session using a called identifier of the call, after the MGCF converts the circuit domain signaling to the SIP message; and
   in manner 2.6, when initiating the call, the user terminal delivers the transfer identifier to the domain transfer AS by containing the transfer identifier in an ICCC message.
Embodiment 12. The method according to embodiment 1, wherein one of a user terminal initiating the domain transfer request and the domain transfer AS sends a message containing a null transfer identifier to the other one so as to indicate that the referred session is a default session.
Embodiment 13. The method according to embodiment 1, wherein a user proxy network element exists in an access path between a user terminal and the domain transfer AS; and when the message is interacted between the user terminal and the domain transfer AS, the user proxy network element finishes a convention between a session control identifier in the message and the transfer identifier or finishes a conversion between a circuit domain message and an SIP message.
Embodiment 14. The method according to embodiment 1, wherein an IP-CAN is connected between a user terminal and the domain transfer AS, the user terminal delivers the transfer identifier to the domain transfer AS by containing the transfer identifier in an SIP message, or accepts the transfer identifier contained by the SIP message delivered from the domain transfer AS.
Embodiment 15. A domain transfer system, comprising:
   a user terminal, adapted to send a domain transfer request message containing a transfer identifier when initiating a domain transfer of a session; and
   a domain transfer application server (AS), adapted to acquire the transfer identifier from the domain transfer request message, and perform the domain transfer on the corresponding session according to the transfer identifier.
Embodiment 16. The system according to embodiment 15, further comprising:
   a user proxy network element, wherein the user proxy network element and the user terminal deliver an Internet protocol multi-media sub system call session control channel message containing the transfer identifier to each other and the user proxy network element and the domain transfer AS deliver a session initiation protocol message containing the transfer identifier to each other.
Embodiment 17. The system according to embodiment 15, further comprising a user proxy network element, located in an access path between the user terminal and the domain transfer AS, and adapted to finish a convention between a session control identifier in the message and the transfer identifier, when the user terminal and the domain transfer AS interact with each other by the message.
Embodiment 18. The system according to embodiment 15, further comprising:
   a first identifier module, adapted to identify the session on the user terminal by using a first identifier;
   a second identifier module, adapted to identify the session on the domain transfer AS by using a second identifier;
   a mapping module, adapted to establish a mapping relation between the first identifier and the second identifier;
   a request sending module, adapted to contain the first identifier in the transfer request as the transfer identifier, and send the transfer request to the domain transfer AS when the session is transferred;
   an identifier determining module, adapted to determine the second identifier corresponding to the first identifier according to the mapping relation; and
   a session determining module, adapted to determine the session according to the second identifier; wherein the domain transfer AS transfers the session determined by the session determining module.
Embodiment 19. A user terminal, comprising:
   a recording unit, adapted to record an association relation between a session and a transfer identifier when the session is established; and
   a containing unit, adapted to acquire the transfer identifier associated with the session from the recording unit, and contain the transfer identifier in a domain transfer request message sent to the domain transfer application server (AS), when a domain transfer of the session is initiated.
Embodiment 20. The user terminal according to embodiment 19, further comprising:
   a allocating unit, adapted to allocate the transfer identifier associated with the session, send the transfer identifier to the recording unit for being recorded, and send the transfer identifier to the domain transfer AS, when the session is established.
Embodiment 21. The user terminal according to embodiment 19, further comprising:
   a receiving unit, adapted to receive a message sent from a network side when the session is established; and
   an extracting unit, adapted to extract the transfer identifier from the message received by the receiving unit, and send the transfer identifier to the recording unit for being recorded.
Embodiment 22. A domain transfer application server (AS), comprising:
   a recording unit, adapted to record an association relation between a session and a transfer identifier when the session is established; and
   a transferring unit, adapted to acquire the transfer identifier from a transfer request message, acquire the session associated with the transfer identifier from the recording unit, and perform a domain transfer on the session.
Embodiment 23. The domain transfer AS according to embodiment 22, further comprising:
   an allocating unit, when the session is established, adapted to distribute the transfer identifier associated with the session, send the transfer identifier to the recording unit for being recorded, and send the transfer identifier to the user terminal.
Embodiment 24. The domain transfer AS according to embodiment 22, further comprising:
   a receiving unit, adapted to receive a message sent from the user terminal when the session is established; and
   an extracting unit, adapted to extract the transfer identifier from the message received by the receiving unit, and send the transfer identifier to the recording unit for being recorded.

In the present invention, during the implementation, the technical structure of the VCC is used, in the technical structure of the VCC, when the circuit domain and the IMS domain have only one session, the session in one domain is transferred to the session in the other domain between the two domains, and it is extended that when several IMS sessions are existing in the IMS domain, the transfer between the two sessions is still supported. Under the condition that the plurality of access networks are existing in the IMS domain, the IMS session under one access is transferred to the IMS session under another access network, thereby solving the problem in the VCC technique in the existing communication system that only the single session is supported in the IMS domain, enhancing the practicability of the VCC technique, and improving the competitiveness of the operator in the network mobile service.

It will be apparent to those skilled in the art that various modifications and variations can be made to the present invention without departing from the scope or spirit of the invention. In view of the foregoing, it is intended that the present invention cover modifications and variations of this invention provided that they fall within the scope of the following claims and their equivalents.

## Claims

1. A method for domain transfer between a circuit switched, CS, domain and an IP-connectivity access network, IP-CAN, for voice call continuity, VCC, **characterized in that**,
receiving, by a domain transfer function, DTF, that is a functional module of a domain transfer application server, AS, an invite message, wherein the invite message contains a transfer identifier, the transfer identifier being a VCC domain transfer number, VDN, or a VCC domain transfer uniform resource identifier, VDI;
determining, by the DTF, that the invite message is a transfer request for an existing session leg according to the transfer identifier VDN or VDI, and
performing, by the DTF, a domain transfer of the session according to the transfer identifier VDN or VDI.

2. The method according to claim 1, wherein different identifiers VDN/VDI are used in different sessions.

3. The method according to claim 1, wherein when the session is established on an IP-CAN, the domain transfer AS allocates the transfer identifier associated with the session, and notifies a terminal by containing the transfer identifier in a session initiation protocol, SIP, message; or
when the session is established on a CS domain, the domain transfer AS allocates the transfer identifier associated with the session, and notifies a terminal.

4. The method according to claim 1, wherein when the session is established on an IP-CAN, a terminal initiating an domain transfer request allocates the transfer identifier associated with the session, and delivers the domain transfer AS by containing the transfer identifier in an SIP message; or
when the session established on a CS domain, a terminal initiating an domain transfer request allocates the transfer identifier associated with the session, and notifies the domain transfer AS.

5. The method according to claim 1, wherein the domain transfer AS delivers the transfer identifier to the terminal by containing the transfer identifier in a circuit domain in one of manners as follows:
the domain transfer AS delivers the transfer identifier to the terminal by containing the transfer identifier in an IP multi-media sub system CS control channel, ICCC, message;
the terminal and a user proxy network element deliver the transfer identifier to each other by containing the transfer identifier in the ICCC message, and the user proxy network element and the domain transfer AS deliver the transfer identifier to each other by containing the transfer identifier in an SIP message; and
the domain transfer AS delivers the transfer identifier to the terminal by containing the transfer identifier in an SIP signaling and converting the transfer identifier to a user-to-user information, UUI, message through a media gateway control function, MGCF.

6. The method according to claim 1, wherein the transfer identifier is contained in an SIP message in one of the manners as follows:
containing the transfer identifier in a newly defined SIP header field DT-ID or a newly defined SIP header parameter Transfer-ID to a header field To;
containing the transfer identifier in the SDP content of the SIP message; and
containing the transfer identifier in the extension usage of original Replace SIP header filed or SIP header parameter.

7. A method for domain transfer between a circuit switched, CS, domain and an IP-connectivity access network, IP-CAN, for voice call continuity, VCC, **characterized in that**,
allocating, by a terminal, a transfer identifier associated with a session, the transfer identifier being VDN or VDI;
sending, by the terminal, an invite message to a domain transfer function, DTF, that is a functional module of a domain transfer application server, AS, wherein the invite message contains the transfer identifier;
wherein the transfer identifier is for the DTF to determine the invite message is a transfer request for the session and perform a domain transfer of the session.

8. The method according to claim 7, wherein when the session is established on an IP-CAN, the invite message is an SIP message.

9. The method according to claim 8, wherein the transfer identifier is contained in the SIP message in one of the manners as follows:
containing the transfer identifier in a newly defined SIP header field DT-ID or a newly defined SIP header parameter Transfer-ID to a header field To;
containing the transfer identifier in the SDP content of the SIP message; and
containing the transfer identifier in the extension usage of original Replace SIP header filed or SIP header parameter.

10. A domain transfer application server, AS for a domain transfer between a circuit switched, CS, domain and an IP-connectivity access network, IP-CAN, for VCC, comprising:
a receiving unit configured to receive an invite message, wherein the invite message contains a transfer identifier, the transfer identifier being a VCC domain transfer number, VDN, or a VCC domain transfer uniform resource identifier, VDI; and
a determining unit configured to determine that the invite message is a transfer request for an existing session leg according to the transfer identifier VDN or VDI, and
a transferring unit configured to perform a domain transfer of the session according to the transfer identifier VDN or VDI.

11. The domain transfer AS according to claim 10, wherein different identifiers VDN/VDI are used in different sessions.

12. The domain transfer AS according to claim 10, when the session is established on an IP-CAN, further comprising:
an allocating unit configured to allocate the transfer identifier associated with the session, and notify a terminal by containing the transfer identifier in a session initiation protocol, SIP, message.

13. A terminal for domain transfer between a circuit switched, CS, domain and an IP-connectivity access network, IP-CAN, for voice call continuity, VCC, comprising:
an allocating unit configured to allocate a transfer identifier associated with a session, the transfer identifier being VDN or VDI;
a sending unit configured to send an invite message to a domain transfer function, DTF, that is a functional module of a domain transfer application server, AS, wherein the invite message contains the transfer identifier;
wherein the transfer identifier is for the DTF to determine the invite message is a transfer request for the session and perform a domain transfer of the session.

14. The terminal according to claim 13, wherein when the session is established on an IP-CAN, the invite message is an SIP message.

15. The terminal according to claim 14, wherein the transfer identifier is contained in the SIP message in one of the manners as follows:
containing the transfer identifier in a newly defined SIP header field DT-ID or a newly defined SIP header parameter Transfer-ID to a header field To;
containing the transfer identifier in the SDP content of the SIP message; and
containing the transfer identifier in the extension usage of original Replace SIP header filed or SIP header parameter.
